# EUROPEAN PATENT SPECIFICATION

(11) **EP 4 128 285 B1**
(45) Date of publication and mention of the grant of the patent: **05.08.2026**
(21) Application number: 21716521.6
(22) Date of filing: 24.03.2021
(51) Int. Cl.: H01B 1/18, C01B 32/168, C01B 32/16

(54) **CONDUCTIVE ELEMENT**
LEITFÄHIGES ELEMENT
ÉLÉMENT CONDUCTEUR

(30) Priority: 24.03.2020 GB 202004267
(43) Date of publication of application: 08.02.2023
(73) Proprietor: Quantum Conductors Ltd, East Farleigh Kent ME16 9NB (GB)
(72) Inventor: FRANKS, John Edward, East Farleigh Kent ME16 9NB (GB)
(74) Representative: Carpmaels & Ransford LLP
(86) International application number: PCT/GB2021/050712
(87) International publication number: WO 2021/191601

(56) References cited:
- WO-A1-2016/117198
- WO-A1-2019/065089
- JP-A- 2005 263 564
- JP-A- 2007 066 532

## Description

The present invention relates to a method for producing a conductive element precursor, and a conductive element, particularly a wire, and a method for producing the same.

Conductive elements, and in particular wiring, are ubiquitous in our everyday lives. Conductors are present in aeroplanes, cars, spacecraft, and in power cables for carrying electricity over great distances to name just a few applications. For each of these applications it would be advantageous to increase the current carrying capacity, decrease the resistance, and/or reduce the weight of these cables and/or reduce the size of the required cables. Such a reduction in weight for aerospace and car applications would significantly reduce fuel consumption and CO₂ production. An increase in current carrying capacity can reduce losses when transporting electricity through power cables. There is therefore a desire to create improved conductive elements and precursors that can be utilised for forming the required conductive elements. In particular, there is a desire for improved conductive elements in the form of wires.

There are also numerous applications that would benefit from tailoring the conductivity properties of the conductive element. In particular, ensuring that the highest conductivity occurs in specific directions or patterns within the conductive element. There is therefore a desire to improve the ability to optimise and control the conductivity properties of a conductive element.

JP2007/066532A describes a CNT electron emitting substrate, and that in this CNT electron emitting substrate, a plurality of CNT are almost perpendicularly disposed and integrated on a metal mask having an opening part.

WO 2019 065089 A1 relates to an anisotropically conductive sheet and anisotropically conductive sheet manufacturing method.

JP 2005 263564 A relates to a method for manufacturing carbon nanotube.

WO 2016/117198 A1 relates to an opening substrate.

The present invention provides a conductive element precursor comprising a metallic substrate, wherein the metallic substrate has an upper surface and a lower surface, and a plurality of openings, wherein each of the plurality of openings is defined by a wall extending through the substrate between the upper surface and the lower surface; and a plurality of carbon nanotubes, wherein the plurality of carbon nanotubes is grown on the wall of each of the plurality of openings, wherein each of the plurality of openings forms a shape on the upper surface of the substrate, wherein the shapes of the plurality of openings comprises a shape that comprises a circular section, and wherein the shapes of the plurality of openings comprises an elongate shape, wherein the elongate shape has a longitudinal axis.

The present invention also provides a method of producing a conductive element precursor, the method comprising the following steps: obtaining a metallic substrate, wherein the metallic substrate has an upper surface and a lower surface, and a plurality of openings wherein each of the plurality of openings is defined by a wall extending through the substrate between the upper surface and the lower surface, wherein each of the plurality of openings forms a shape on the upper surface of the substrate, and wherein the shapes of the plurality of openings comprises an elongate shape, wherein the elongate shape has a longitudinal axis, and wherein the shapes of the plurality of openings comprises a shape that comprises a circular section; and growing a plurality of carbon nanotubes on the walls of each of the plurality of openings.

Utilising a metallic substrate with a plurality of openings improves the ability to control the orientation and distribution of the carbon nanotubes. Since the carbon nanotubes are formed on the walls of the openings, the configuration of the openings can be used to distribute and/or orient the carbon nanotubes in the desired manner. This can reduce the need for further distribution and/or reorientation processes in order to have the carbon nanotubes positioned and oriented as desired in the final conductive element. The present invention is particularly useful to orient the carbon nanotubes within the plane of the substrate.

The presence of openings extending through the substrate also provides an additional surface on which the carbon nanotubes can be formed increasing the proportion of carbon nanotubes that can be incorporated into the final conductive element.

The present invention also provides an insert that comprises the conductive element precursor described herein, wherein the conductive element precursor is in a rolled-up configuration.

The present invention further provides a method of producing an insert, the method comprising producing the conductive element precursor as described herein; and further comprising the step of rolling up the substrate to form the insert.

In the insert, the carbon nanotubes can be formed into a layered configuration by rolling up the substrate. This provides the advantages of the conductive element precursor described herein in a useful configuration. The insert is a form of the conductive element precursor that is particularly suited for further processing in a drawing step since it can be in a generally cylindrical form.

Also described is a conductive element comprising a matrix, wherein the matrix comprises a metallic material; a first plurality of carbon nanotubes within the matrix, wherein the first plurality of carbon nanotubes are substantially aligned with each other; and a second plurality of carbon nanotubes within the matrix, wherein the second plurality of carbon nanotubes are substantially aligned with each other, and wherein the first plurality of carbon nanotubes are not substantially aligned with the second plurality of carbon nanotubes.

The conductive element having at least two tailored orientations of carbon nanotubes allows the production of conductive elements with the desired directional properties based on the directional properties of the carbon nanotubes. The ability to produce such conductive elements has been enabled by the approaches described herein.

The present invention further provides a method of producing a conductive element, the method comprising producing the insert as described herein; and increasing the length of the insert by swaging, rolling or drawing to form the conductive element. This is a particularly effective approach for producing conductive elements in the form of wires.

The present invention also provides a method of producing a conductive element, the method comprising producing the conductive element precursor as described herein; and further comprising compressing the metallic substrate such as to form the conductive element. This is a particularly effective approach for producing conductive elements in a more planar form, such as conductive tapes.

Carbon nanotubes of the plurality of carbon nanotubes may be at least partially coated with a metallic material. This helps ensure that the carbon nanotubes are in intimate contact with a metallic material, which can assist their incorporation into the conductive element. Further, coating the carbon nanotubes can provide protection to the carbon nanotubes in the subsequent processing steps. This assists in providing good quality electrically conductive carbon nanotubes present in the conductive element and thus provides a high-quality conductive element, where the carbon nanotubes are electrically bonded to the metallic matrix and contribute to the conduction.

Utilising a substrate with a plurality of openings can assist in providing coated carbon nanotubes. In particular, carbon nanotubes formed on the walls of the openings allow the coating process to access the side of the plurality of carbon nanotubes in each opening from the upper surface side and the lower surface side. The coating process can also more readily access the sides of any carbon nanotubes on the upper and/or lower surfaces. Overall, the substrate with a plurality of openings exposes more side surfaces of carbon nanotubes when compared to forming the carbon nanotubes on a substrate without openings, thus increasing the coating process' access to the carbon nanotubes.

The conductive element can be of any form, including that of a foil or sheet, or in a generally elongate form. Accordingly, the present invention is particularly suited for producing conductive elements in the form of a wire or a tape. A wire has a generally circular or square cross-sectional area, whereas a tape has a generally rectangular cross-sectional area. The most preferable form for the conductive element is that of a wire.

The metallic substrate may be of the form of a foil or sheet. As used herein, a sheet has a planar form with a relatively small thickness dimension compared to its dimensions perpendicular to the thickness direction. In particular, a sheet preferably has a thickness dimension that is less than a tenth of any dimension perpendicular to the thickness direction.

The conductive element, such as a conductive tape, may be produced by compressing the conductive element precursor such as to increase its length and form the conductive element. The conductive element may be compressed with or without rolling up the substrate ahead of the compression step. The compressing step changes the cross-section of the conductive element precursor. The conductive element precursor may be subjected to multiple compressing steps. The conductive element precursor may be subjected to annealing steps as described herein, between the compressing steps. The general considerations of a metal rolling process are considered in Le and Sutcliffe, International Journal of Mechanical Sciences 43 (2001), p1405-1419.

The step of compressing the conductive element precursor such as to increase its length and form the conductive tape can be utilised to simultaneously apply a shear force to the plurality of carbon nanotubes on the metallic substrate in a first direction. Alternatively, a separate step of applying the shear force can be utilised. The presence of such a shear force can help emphasise or create the desired orientation of the carbon nanotubes, although it is not required in the present invention.

The metallic material comprises metal. The metallic material preferably consists essentially of metal, most preferably it consists of metal. The metallic material may be a metallic alloy.

The method involves forming a plurality of carbon nanotubes on a metallic substrate, at least on the walls in the openings of the metallic substrate. An opening in the metallic substrate is a hole that is present through the full thickness of the metallic substrate. In other words, an opening provides an open passage through the substrate from its upper surface to its lower surface. An opening is the absence of substrate material. The extent of the opening is defined by a wall. In other words, the wall defines the boundary of the opening. The wall is an internal surface of the substrate that is between the upper surface and the lower surface. By forming the carbon nanotubes on such an internal surface, the carbon nanotubes can be readily incorporated into the bulk of the metallic material. They can also be readily orientated within the plane of the metallic substrate. This provides improved design flexibility.

The wall is a continuous surface that defines the opening, i.e. the wall fully defines the opening. The wall may be made up of discrete and identifiable surfaces that extend at an angle to each other. This may be the case, for example, when the wall defines an opening with a square cross-sectional shape. In this example, the wall is made up of four surfaces that meet at right-angles.

The wall may extend perpendicular to the upper surface and/or lower surface of the metallic substrate. The upper surface and lower surface of the metallic substrate may be substantially parallel. In this case, the wall may extend perpendicular to both the upper surface and the lower surface. The actual arrangement of the openings can be chosen based on the design requirements for the conductive element.

Each of the plurality of openings may form a shape on the upper surface of the substrate. In other words, the outline of the opening as viewed on the upper surface has a discernible shape. The shape is defined by the line where the wall of the opening meets the upper surface. The wall may transition to the upper surface in a smooth manner. In this case, the line where the wall meets the upper surface runs along the mid-point of this transition. There may be a corresponding shape formed on the lower surface of the substrate. Analogously, this shape is defined by the line where the wall of the opening meets the lower surface. It is said that the shape on the lower surface corresponds with the shape on the upper surface because the opening runs between both shapes.

The shape of the opening on the upper surface of the substrate may be the same as the corresponding shape on the lower surface of the substrate. In this case, the opening may have a substantially constant cross-section from the upper surface to the lower surface. The cross-section of the opening is the area that is perpendicular to the axis running along the centre of the opening between the upper surface and the lower surface. Such a relatively simple arrangement increases the ease of manufacture of the openings.

The shape of the opening comprises a circular section. In other words, the line defining the shape of the opening on the upper and/or lower surface has part of that line in the form of a section of a circle. The circular section is preferably concave with respect to the centre of the opening. Circular sections can assist with the processing of the metallic substrate to form the conductive element precursors of the present invention. In particular, it has been found that circular sections assist in avoiding cracking of any layers formed on the substrate, such as the ceramic layer described herein.

As noted herein, the plurality of openings may each form a shape on the upper and/or lower surface of the substrate. Of these shapes of the plurality of openings, at least some of these shapes are elongate shapes. Elongate shapes have a length dimension that is longer than their width dimension, such as an ellipse or a rectangle. The elongate shapes will each have a longitudinal axis. The longitudinal axis runs along the length of the shape at the midpoint between the two sides of the shape. By using openings with an elongate shape, each opening can provide an anisotropic contribution to the orientation of the carbon nanotubes since a significant proportion of carbon nanotubes will be oriented in a certain direction based on the orientation of the walls. Alternatively, openings that from circular shapes on the upper and/or lower surfaces of the substrate may be utilised when the presence of a dominant orientation is to be avoided.

The elongate shape may have a length that is measured along its longitudinal axis of 0.5 mm or greater, 1 mm or greater, or 2 mm or greater, or 4 mm or greater. The longer length of the longitudinal axis will provide a greater length of wall in the desired orientation along which carbon nanotubes can grow. The elongate shape can be any suitable length but may be 50 mm or less.

The elongate shape and its orientation may be chosen based on the desired final properties of the conductive element. The elongate shape may comprise two parallel sides, i.e. two sides that are parallel to each other. This has the benefit of having two sides that can contribute to the anisotropic nature of the elongate shape in a similar manner. Further, these parallel sides can be substantially parallel to the longitudinal axis of the elongate shape. This means that the parallel sides are the dominant contributor to the orientation of the carbon nanotubes for that shape.

As noted herein, the shape comprises a circular section. In the case where the shape comprises two straight, possibly parallel, sides, these two sides can, at least partially, be connected by a circular section. This provides the benefit associated with the presence of these circular sections along with the presence of parallel sides.

An elongate shape with two straight, possibly parallel, sides may have a first circular section, wherein the first circular section connects a first end of one of the sides with a first end of the other side. Further, this elongate shape may comprise a second circular section, wherein the second circular section connects a second end of one of the straight sides with a second end of the other straight side. Such a shape combines the benefit of the presence of circular sections with the presence of straight sides that help to contribute to the desired final properties of the conductive element based on carbon nanotube distribution and orientation. A further advantageous shape is a rectangular shape with four sides, two pairs of parallel sides, wherein each corner is a rounded corner so as not to be a sharp right angle.

In general, the elongate shape may have a plane of symmetry running along its length. This emphasises the effect of anisotropy introduced by the elongate shape. When the elongate shape has two parallel sides, the plane of symmetry may be located between the parallel sides and run parallel to the parallel sides.

The parallel sides may have a length of greater than 0.5 mm or greater, 1 mm or greater, or 2 mm or greater, or 4 mm or greater.

The shortest distance across the elongate shape, and thus the opening on the surface of the substrate, may be 50 µm or greater, 100 µm or greater, 200 µm or greater or preferably 500 µm or greater. The shortest distance across the elongate shape may be 1 mm or less. When the elongate shape has parallel sides, this may be the distance between the parallel sides. These openings allow a substantial length of carbon nanotubes to grow within the openings.

Each of the plurality of openings may share common features, which may be any of the features described herein. For example, each of the plurality of openings may form an elongate shape on the upper surface of the substrate. Therefore, the shapes have the common feature of being elongate. However, they may differ in other respects, such as be of different lengths. This allows the use of common features that contribute to the desired final properties while further tailoring requirements by having some uncommon features.

There may be further openings beyond the plurality of openings that may or may not share common features with the plurality of openings. Alternatively, the only openings in the substrate that contain carbon nanotubes may be the plurality of openings.

When the shapes of the plurality of openings comprises a plurality of elongate shapes, the longitudinal axis of each of the elongate shapes may be substantially parallel to each other. This means that all of the elongate shapes contribute to the orientation of the carbon nanotubes in a similar manner. Further the longitudinal axes may be parallel to an edge of the upper surface of the substrate. This means that the orientation is related to the overall form of the substrate, which can be useful for subsequent processing, such as the rolling-up and drawing steps described herein.

It is particularly noted that the shapes of the plurality of openings may comprise a first plurality of elongate shapes and a second plurality of elongate shapes, wherein the longitudinal axis of each of the first plurality of elongate shapes are substantially parallel to each other and the longitudinal axis of each of the second plurality of elongate shapes are substantially parallel to each other. In this case, the longitudinal axes of the first plurality of elongate shapes are not substantially parallel to the longitudinal axes of the second plurality of elongate shapes. In addition there may be a further plurality, or pluralities, of elongate shapes, wherein the longitudinal axis of each of these elongate shapes are substantially parallel to each other in that plurality and where the longitudinal axis of each of these elongate shapes are not substantially parallel to any of the other plurality of elongate shapes. In particular, there may be three such pluralities of elongate shapes, or four such pluralities of elongate shapes. This advantageously allows the tailoring of the properties of the conductive element in an increasing number of distinct directions, including the tailoring of the mechanical properties of the substrate.

The shapes of the plurality of openings may comprise two or more different shapes. This can further enable flexible tailoring of the final properties of the conductive element. Alternatively, the plurality of openings may all have the same shapes on the upper and/or lower surfaces. Shapes are the same when they are identical in all respects and are different when they differ in at least one respect, such as having a different size.

The plurality of openings may form a repeating pattern on the upper and/or lower surface of the substrate. A repeating pattern reinforces the desired effect of the unit of the repeating pattern across the whole of the substrate. A repeating pattern is any pattern where a unit of the pattern is repeated at regular intervals across the substrate.

The shortest distance between adjacent openings is 100 µm or less, preferably 50 µm or less. This is preferably the shortest distance between adjacent openings for all of the openings of the plurality of openings that are present in the substrate. This ensures a high proportion of carbon nanotubes are present relative to the amount of substrate that is present. When the openings form an elongate shape on the upper and/or lower surfaces, the shortest distance may be perpendicular to the longitudinal axis. This can ensure a high proportion of carbon nanotubes in the direction of interest.

Overall, the plurality of openings may account for 70% or more of the area of the region of the upper surface within which the openings are present. Preferably, the openings account for 75% or more, and most preferably 80% or more of the region of the upper surface, within which the openings are present. The region of the upper surface within which the openings are present is the area defined by the outer-most openings. The high prevalence of the openings allows for a high proportion of carbon nanotubes in the final conductive element.

The openings can be formed in the metallic substrate by any suitable method. In particular, the openings can be formed by removing material from a substrate. Laser cutting of the substrate has been found to be a particularly effective method. Photolithography is another approach for forming the openings that has been found to be effective.

The upper surface and lower surface are separated by a distance that is the thickness of the substrate. The shortest distance between adjacent openings may be less than the thickness of the substrate. This reduces the amount of surface on the upper and lower surfaces of the substrate relative to the amount of surface provided by the walls in the openings. This allows an increased proportion of carbon nanotubes whose orientation is dictated by the walls of the openings relative to those dictated by the upper or lower surfaces.

Carbon nanotubes may be grown on a first, upper, surface of the metallic substrate. The carbon nanotubes can also be grown on a second, lower, surface of the metallic substrate. This can be achieved by having all surfaces that are to have carbon nanotubes grown on them exposed during the process of growing the carbon nanotubes.

The upper and lower surfaces can be opposing surfaces. When the metallic substrate is in the form of a foil or sheet, the upper and lower surfaces can be the two major surfaces of the foil or sheet.

The carbon nanotubes can be formed on the surface of the metallic substrate such that the carbon nanotubes grow away from the surface. The longitudinal axis of the carbon nanotubes can be substantially aligned. The longitudinal axis of the carbon nanotubes can be substantially perpendicular to the plane of the surface of the metallic substrate on which they are grown, which includes the walls defining each of the plurality of openings. The longitudinal axis of any carbon nanotubes on the upper surface can be substantially perpendicular to the plane of the upper surface of the metallic substrate. The longitudinal axis of any carbon nanotubes on the lower surface can be substantially perpendicular to the plane of the lower surface of the metallic substrate. It has been found that the alignment of the carbon nanotubes transitions relatively abruptly in the area that moves from the wall of the opening to the upper or lower surface. As explained herein, this exposes the sides of the carbon nanotubes for subsequent processing.

During the growth of the carbon nanotubes, a planar substrate may be oriented so that the upper surface and lower surface are oriented substantially vertically. This allows good access into the openings for the growth process.

When referring to vertical and horizontal herein, vertical is defined as the direction of gravitational force as indicated by a plumb-line. The horizontal direction is perpendicular to the vertical direction.

As used herein, the term "substantially aligned" refers to the carbon nanotubes being orientated so that the majority of carbon nanotubes have their longitudinal axis within a 45º range, preferably 25º, or preferably 20º, or 15º, or 10º, or most preferably within 5º. Substantially all, or all, of the carbon nanotubes may have their longitudinal axis within these ranges.

As used herein, the term "substantially perpendicular" or "substantially parallel" in reference to carbon nanotubes means that the majority of carbon nanotubes are orientated so that their longitudinal axis lies within 22.5º of the perpendicular direction or parallel direction, respectively, preferably within 20º, or 15º, or 10º, or most preferably within 5º. Substantially all, or all, of the carbon nanotubes may have their longitudinal axis within these ranges.

The terms "substantially perpendicular" or "substantially parallel" in reference to surfaces or axes means that the surfaces or axes are within 5º, preferably 2º, most preferably 1º of perpendicular or parallel, respectively.

By forming the carbon nanotubes on a metallic substrate, the resulting carbon nanotubes are in an unbundled state, i.e. the majority of carbon nanotubes exist as separate carbon nanotubes. This allows their conductivity properties to be maintained when incorporated into the conductive element. This is in contrast to carbon nanotubes present in bundles, which have diminished conductivity properties. The subsequent coating of the carbon nanotubes can assist in keeping the nanotubes separated.

In the present invention, the carbon nanotubes are grown on the substrate. In particular, the carbon nanotubes are grown on the wall of each of the plurality of openings.

In the present invention, the carbon nanotubes are grown on the substrate, and the carbon nanotubes are retained on the substrate throughout the subsequent processes in order produce the conductive element precursor and the final conductive element product. This increases the ease of handling the carbon nanotubes.

The step of forming a plurality of carbon nanotubes on a metallic substrate may involve forming the plurality of carbon nanotubes directly on a metallic substrate. Alternatively, there is preferably an intervening material layer between the metallic substrate and the growing carbon nanotubes.

Any method of forming a plurality of carbon nanotubes on a metallic substrate may be used, especially those that produce aligned carbon nanotubes. Such approaches include pyrolysis of hydrocarbon gases such as acetylene, butane or methane in the presence of ferrocene or iron phthalocyanine.

A particularly preferred approach involves chemical vapour deposition. The chemical vapour deposition process utilised can be a direct liquid injection chemical vapour deposition (DLICVD) approach. In this approach, a liquid hydrocarbon precursor is injected, vaporised and then carried to a reaction chamber where the carbon nanotubes are deposited and grown on the substrate. Various types of liquid hydrocarbons can be used with this approach, for example n-pentane, isopentane, hexane, heptane, octane, cyclohexane, benzene, toluene, or xylene.

In order to initialise the growth of the carbon nanotubes a catalyst can be present. This catalyst may be present on the metallic substrate. The distribution of the catalyst on the metallic substrate can be essentially random. However, it is particularly preferred that the catalyst is included in the liquid with the hydrocarbon in a DLICVD process and is injected and introduced into the reaction chamber along with the hydrocarbon. The use of a catalyst assists in forming the plurality of carbon nanotubes on the surface of the metallic substrate so that they are in an unbundled state.

Potential catalysts for assisting the growth of the carbon nanotubes include iron, cobalt, nickel, ruthenium, palladium and platinum. Where the catalyst is to be introduced with the liquid hydrocarbon, a precursor of the catalyst metal is selected, for example metal salts and organometallic compounds. Particularly preferred compounds are ferrocene, nickelocene, cobaltocene, ruthenocene, iron phthalocyanine and nickel phthalocyanine.

When the metal catalyst precursor is combined with the liquid hydrocarbon, it can be in a concentration of 0.2 to 15% by weight. Preferably 1 to 10% by weight, or 1.5 to 7% by weight, most preferably 1.5 to 5% by weight. A particularly preferred amount is 2.5% by weight.

In the DLICVD process, the injected liquid is preferably introduced in the form of droplets. This increases the ease with which the liquid can be evaporated and carried into the reaction chamber.

The pyrolysis is carried out at a temperature between 600 and 1100ºC, preferably from 700 to 1000ºC and most preferably 700 to 900ºC.

The substrate may be heated up to the reaction temperature via resistive heating of the substrate itself, i.e. by passing a current through the substrate. However, in the present invention it is preferred that a separate heating source provides the heat.

The pyrolysis can be carried out for any suitable amount of time in order to form the required amount of carbon nanotubes. For example, the pyrolysis may be carried out for at least 5 minutes. The pyrolysis may be carried out for at least 10 minutes, or at least 15 minutes.

The form of the droplets and the frequency with which the droplets are injected may be varied as required by the process. For example, each droplet may have a volume of between 2 to 100 µl. The droplets may be injected at a frequency of 0.9 to 1200 injections per minute, possibly a rate of 1 to 60 injections per minute, preferably between 20 and 30 injections per minute. Alternatively, the droplets may be injected at a frequency of over 2000 injections per minute, for example 3000 injections per minute. Such a high injection frequency has been found to be particularly effective.

Prior to forming the carbon nanotubes, it is preferable that the metallic substrate has a layer formed on it. This layer may be a metallic layer or a ceramic layer. The nanotubes can then grow on this layer. The layer can be from 20 to 500 nm in thickness, possibly 400 nm in thickness. Possible ceramics for the ceramic layer include SiO₂, Al₂O₃, ZrO₂, TiO₂, Y₂O₃, SiC, SiCN, SiON and SiCN. The particularly preferred ceramic is SiO₂. Possible metallic materials for this layer include nickel.

The layer may be deposited via chemical vapour deposition before forming the plurality of carbon nanotubes. In particular, the ceramic layer may be formed by DLICVD. Any suitable precursor may be used. The precursor may be dissolved or suspended in a liquid. Possible ceramic precursors include Si(OEt)₄, (iPrO)₃Al, (BuO)₄Zr, (BuO)₄Sn, titanium isopropoxide, titanium acetylacetonate, yttrium tetramethylheptanedionate, dibutoxy diacetoxy silane or HMDS. The use of dibutoxy diacetoxy silane has been found to be particularly effective. The pyrolysis is performed at a temperature and pressure sufficient to ensure the decomposition of the precursor.

The chemical vapour deposition of the layer and the chemical vapour deposition of the nanotubes may occur in the same reactor. Alternatively, the deposition of a layer can occur in a separate reactor to the deposition of the nanotubes. This has the advantage that the first reactor is not exposed to the carbon nanotube growth and so does not require regular cleaning. Also, the reactor used for the deposition of the carbon nanotubes can be selectively closed off and cleaned by introducing a gas containing oxygen to burn off any stray and potentially harmful carbon nanotubes. Therefore, this can facilitate an ultra-clean and ultra-safe process. The temperature of the substrate may be maintained when the substrate is transferred between separate reactors. This can increase the efficiency of the overall process.

In general, the DLICVD process involves the injection of the liquid that is vaporised and subsequently carried by a carrier gas into the reaction chamber. Such carrier gases are usually an inert gas. Possible carrier gases include argon, helium, nitrogen and hydrogen or mixtures of these. The carrier gas may be supplied at a rate of between 1 and 5 SLM, preferably between 1 and 3 SLM. Although, any carrier gas rate suitable for the reactor size may be utilised.

The growth of the carbon nanotubes may be assisted by utilising the presence of H₂O or CO₂ in the carrier gas stream, as described in Sato et al, Carbon 136 (2018), pp 143-149. The presence of H₂O and CO₂ is particularly advantageous for the uniform growth and increased yield of carbon nanotubes. The H₂O or CO₂ is utilised in the growth phase of the carbon nanotubes and, without wishing to be bound by theory, it is believed that these additions help prevent catalyst deactivation by removing carbon by-products and/or suppressing Ostwald ripening of catalyst particles. Other useful aids for growth that can be used include iodine and chlorine.

Following the step of forming the plurality of carbon nanotubes, any loose carbon nanotubes can be removed by blowing the plurality of carbon nanotubes with an inert gas, for example argon.

The metallic substrate may comprise any metal. Possible metals for forming the metallic substrate include palladium, platinum, gold, chromium, manganese, aluminium, nickel and copper. Metal alloys can be used for the metallic substrate, for example steel. A particularly preferred metallic substrate for the present invention is copper.

The method of the present invention preferably comprises a coating step. This coating step results in the carbon nanotubes being coated with a metallic material. The carbon nanotubes are preferably coated such that carbon nanotubes are individually coated with the metallic material. Each carbon nanotube of the plurality of carbon nanotubes may be coated with the metallic material. The coating step results in the carbon nanotubes being substantially encompassed by the metallic material. This ensures that the nanotubes are protected during the subsequent processing and also ensures a good interface between the carbon nanotubes and the resulting matrix of a conductive element. It can also assist in avoiding bundling of the carbon nanotubes during subsequent processing of the carbon nanotubes and so maintain their conductivity when they are present in the final conductive element.

Since the coating step results in the carbon nanotubes being partially, substantially or fully enclosed within the metallic material, the carbon nanotubes will be protected during the subsequent step of annealing that is described herein.

The possible metallic materials for the coating step can be independently chosen from the materials listed herein as possible metallic materials for the metallic substrate. The metallic material that is used for coating is preferably the same as the metallic substrate but may be different. The metallic material that is used for coating may comprise the metallic material of the substrate. The metallic material for the coating step is preferably copper.

The coating step can be performed by infiltrating the plurality of carbon nanotubes with an aqueous super saturated metal salt solution or an organic solution. Where an aqueous super saturated metal salt solution is utilised, the carbon nanotubes can undergo an oxygen plasma functionalization step prior to infiltration in order to make the nanotubes hydrophilic. Following infiltration, the plurality of nanotubes are then dried to deposit the metal precursor. This metal precursor can then be reduced in order to convert it to the metallic material. This infiltration and drying step can be repeated several times to coat the carbon nanotubes to a desired degree.

A particularly advantageous approach for coating carbon nanotubes utilises chemical vapour deposition. Chemical vapour deposition can be used to fully coat the carbon nanotubes. Alternatively, the coating step may occur in two stages. Firstly, the carbon nanotubes can be initially decorated with the metallic material and then a second stage can be used to complete the coating with further metallic material. This initial decoration is preferably the same material as the further coating. However, the initial decoration can be a different material to the further coating step. For example, a nickel decoration step can be utilised and a different material, such as copper, is then used for the further coating. Alternatively, the initial decoration step is the same material as the further coating but there is a further material that is deposited in the decorating step, either at the same time as the initial decorating step or as a separate decorating step. As used herein, the term "decorated" refers to the deposition of particles of metallic material on the surfaces of the carbon nanotubes.

The first stage of decorating the carbon nanotubes with the metallic material can occur via an initial infiltration step, such as infiltrating with an aqueous super saturated metal salt solution or an organic solution as detailed herein, or alternatively can occur via the CVD approach. By utilising the CVD approach, the carbon nanotubes can be coated without the need to treat the carbon nanotubes to make them hydrophilic or utilise an organic solvent. Any suitable metallic precursor can be used for this decoration step. The initial decorating stage primes the carbon nanotubes so that the coating can be subsequently completed by an aqueous copper plating process. The initial decorating step allows initial sites of metallic material to be formed throughout the carbon nanotubes. The CVD approach is particularly effective at achieving this. These initial regions of deposited metallic material facilitate the subsequent uniform coating of the carbon nanotubes. Further, by performing an initial decorating step, the carbon nanotubes can be maintained in an unbundled state when undergoing a processing step, such as the optional application of a shear force described herein, before the final stage of coating.

The electrical properties of the carbon nanotubes may be improved by the inclusion of a doping step whereby the carbon nanotubes are decorated using a CVD approach with molecules of a halogen such as iodine. This step can be carried out before, or after, or intermediate or concurrent with, the step of decorating the carbon nanotubes with a metallic material. A suitable solution for use in doping iodine via CVD is a solution of iodoethane (C₂H₅I) in toluene, particularly two parts of iodoethane for one part of toluene. An alternative solution for use with CVD is I₂ crystals in solution in toluene.

It is particularly advantageous to utilise CVD for the step of depositing the ceramic or metallic interlayer (possibly in a first reactor), the step of depositing the carbon nanotubes (possibly in a second reactor), and decorating the carbon nanotubes (possibly in a third reactor). Utilising CVD for each of these steps should increase efficiency of the overall process. Also, utilising separate reactors (chambers) for each step assists in maintaining the ultra-clean and ultra-safe process, where each reactor can be selectively isolated from the others.

Following a decorating stage, the coating can be finished by using an electroplating step. In this way, the metallic material is electroplated onto the nanotubes. This approach ensures a good coverage of the carbon nanotubes by the coating step.

In the electroplating step, the metallic substrate with the carbon nanotubes thereon is the cathode of the electrolytic cell, while the anode may be an electrolytic grade metallic coating material in an anode bag. The metallic substrate can be electrically connected to the current supply via a conductive clamp. Multiple conductive clamps can be connected at opposing extremities of the metallic substrate. The cell can be set up with the anode bag extending geometrically parallel to the metallic substrate in order to assist in providing a homogenous coating. The electroplating bath may comprise CuSO₄. The electroplating bath may additionally comprise sulphuric acid, sodium chloride, N-methyl pyrrolidone, methanol, ethanol, acetonitrile, cetyl trimethyl ammonium bromide, octylphenoxypolyethoxyethanol, and/or sodium dodecyl sulphate. The electroplating bath comprising a combination of a cationic and a non-ionic surfactant, such as cetyltrimethylammonium bromide and octylphenoxypolyethoxyethanol, has been found to be particularly effective.

The electroplating bath may have a concentration of between 10 and 100% relative to the maximum concentration. In particular, the concentration may be between 30% and 60% relative to the maximum concentration, for example 40%.

The electroplating bath may be maintained at a temperature of between -20 °C and 50 °C during the electroplating process. In particular, the temperature may be between -10 °C and 10 °C, for example -5 °C.

The electroplating bath may be agitated during the electroplating process. Suitable methods of agitation include sparging, stirring (for example by using a magnetic stirrer), and ultrasonic agitation.

Electroplating may be carried out using a pulsed plating frequency of 0.1 Hz to 100 kHz, for example 500 Hz.

Electroplating may be used to fully coat the carbon nanotubes. In other words, electroplating can be used without the initial decoration step described herein.

The present invention may comprise a rolling step. In this step, the substrate with the, possibly coated, carbon nanotubes is wound about itself. In other words, the substrate with the carbon nanotubes formed on it is rolled up, in an analogous way to rolling up a carpet. Therefore, it can be said that this step involves rolling up the substrate with the carbon nanotubes to form an insert. In other words, it is in such a form as to assist its insertion in the further processing steps.

The rolling step is preferably carried out so that at least a portion of the upper surface of the metallic substrate contacts the lower surface of the metallic substrate. When carbon nanotubes have been grown on the upper and/or lower surfaces of the substrate, at least a portion of the carbon nanotubes formed on one surface of the metallic substrate can contact carbon nanotubes formed on another surface, or the other surface itself, of the metallic substrate. In this manner, the rolling step results in the sandwiching of at least a portion of the carbon nanotubes between layers of the metallic substrate. This has the benefit of surrounding the carbon nanotubes with further metallic substrate which aids the incorporation of the carbon nanotubes into the final conductive element in the subsequent steps.

In order to aid the rolling step, the metallic substrate is preferably in the form of a sheet. In other words, the substrate has a relatively small thickness dimension compared to a relatively large width and length dimension. The sheet may be particularly thin and thus be termed a foil. Such a foil may have a thickness of less than 1 mm, or less than 0.5 mm, preferably less than 0.2 mm and most preferably 0.1 mm or less. Since the area of the walls in the openings is related to the thickness of the substrate, it is useful for these to be of a sufficient area. The thickness is therefore 10 µm or greater, 25 µm or greater, 50 µm or greater, 75 µm or greater, 100 µm or greater, and most preferably 200 µm or greater. A metallic substrate having a thickness of between 50 µm and 500 µm has been found to be particularly effective.

The possible width and length dimensions of the metallic substrate are not particularly limited. The length dimension may be at least twice the width dimension, alternatively at least three times the width dimension, or at least four times the width dimension. The width dimension may be 50 mm or greater, or 100 mm or greater. The length dimension may be 100 mm or greater, 300 mm or greater, or preferably 400 mm or greater.

The metallic substrate may be dimensioned such that the rolling up step results in the substrate being rolled around itself at least twice. In other words, the substrate is rolled up such that it is rolled through 720º, preferably it is rolled at least 3 times, or 4 times, or 5 times, or 6 times. Even more preferably, the substrate is rolled up such that it is rolled at least 10 times, 15 times, 20 times, 25 times, 35 times, 45 times, or 50 times. The substrate may be rolled up such that it is rolled up to 50 times. By increasing the amount of times that the substrate is rolled about itself, the number of layers of carbon nanotubes sandwiched between the substrate increases. This provides more carbon nanotube material through which conduction can occur in the final product.

The rolling step preferably comprises rolling the substrate with the coated carbon nanotubes around a metallic bobbin. Utilising a bobbin facilitates the rolling step. Preferably the metallic substrate is in contact with the metallic bobbin when rolling the substrate around the bobbin. The bobbin is preferably a solid piece of material. In particular, the bobbin is preferably the same material as the substrate. In this way, the metallic bobbin contributes along with the substrate to the metallic matrix in the final product. Even more preferably, the metallic bobbin, the metallic substrate, and the metallic material used in the coating step are all the same material and they all contribute to the metallic matrix in the final product. In line with the statements regarding the metallic substrate, the metallic bobbin may comprise any of the metals highlighted for the metallic substrate. The metallic bobbin preferably comprises copper.

The dimensions of the metallic bobbin are not particularly limited. Any dimensions suitable for subsequent processing can be used. The metallic bobbin may be at least 10 mm in diameter at its greatest point, alternatively, at least 20 mm in diameter, 50 mm in diameter, 100 mm in diameter, 200 mm in diameter, or 300 mm in diameter. The increase in diameter increases the amount of substrate that can be rolled on to the bobbin.

It is preferred that the metallic substrate with the coated carbon nanotubes is affixed to the conductive bobbin prior to the rolling step. This facilitates the rolling step.

The metallic substrate may be affixed to the conductive bobbin by welding, soldering, brazing or mechanical means.

The metallic substrate may be affixed to the metallic bobbin along one edge of the metallic substrate. This provides one fixed edge relative to the bobbin that is retained in place, while the opposite free end is rolled about the metallic bobbin in order to roll the substrate around the metallic bobbin. The metallic bobbin may contain a slot configured to receive an end of the metallic substrate to retain the metallic substrate along the one edge.

The metallic bobbin with the metallic substrate rolled around it can be placed in a metallic sleeve in order to form the insert. The metallic bobbin can be shaped such that it comprises a recess into which the metallic substrate will be rolled up. The metallic substrate and the bobbin are sized such that when the metallic substrate is fully rolled onto the bobbin it fills the recess so as to be flush with the outer surface of the bobbin. This ensures that the bobbin with the metallic substrate thereon can be slid into a sleeve and allows for a tight fit in the sleeve. Alternatively, the metallic substrate and the bobbin are sized such that when the metallic substrate is fully rolled onto the bobbin it fills the recess so as to sit just proud of the rest of the bobbin. This can ensure that the rest of the bobbin does not interfere with the initial compaction of the metallic substrate during the subsequent drawing step and promotes the production of a quality interface during the subsequent processing of the insert.

The sleeve and the bobbin can be any suitable length such that bobbin can be received within the sleeve. The sleeve may be up to 1 metre long. The bobbin may be up to 400 mm long.

The metallic sleeve may comprise any of the metals listed herein in relation to the metallic substrate. It is preferable that the metallic sleeve is the same material as the metallic bobbin. In particular, the metallic sleeve preferably comprises copper. The metallic sleeve contributes to the matrix of the final product. Thus, it is particularly preferred that the metallic sleeve, metallic bobbin, metallic material and the metallic substrate are all the same material, which comprises copper. In aspects of the present invention where not all of the metallic sleeve, metallic bobbin, metallic material and the metallic substrate are present, those that are present are preferably all the same material, which is preferably copper.

The method of the present invention may further comprise the step of applying a shear force to the plurality of carbon nanotubes on the metallic substrate in a first direction prior to the rolling step. This has the effect of moving, and preferably aligning, the plurality of carbon nanotubes towards a first direction. This allows the alignment to be chosen relative to the desired final structure of the product. The step of applying a shear force to the plurality of carbon nanotubes on the metallic substrate in a first direction may occur after the rolling step. The step of applying a shear force to the plurality of carbon nanotubes may refer to the shear force applied during the application of a drawing step or may be a step of applying the shear force separate to a drawing step.

This step of applying the shear force may be carried out before a coating step. In this manner, the carbon nanotubes are reoriented when they are relatively easy to move, in contrast to moving them after they have been coated. The step of applying the shear force may be carried out during a coating step. For example, the carbon nanotubes may be decorated as described herein as an initial step in the coating process, the shear force can then be applied before a later coating step is conducted to complete the coating step. This can assist in keeping the nanotubes in an unbundled state during the step of applying the shear force. The step of applying the shear force may be carried out after the coating step.

The shear force can be applied via the use of a tool, for example a tool with a flat edge. The tool may be moved along the surface of the metallic substrate on which the carbon nanotubes are formed, while the tool is kept in contact directly or indirectly with the carbon nanotubes. This results in a shear force on the carbon nanotubes. The shear force applied to the free ends of the carbon nanotubes causes the carbon nanotubes to move towards the first direction. The amount of force applied can be tailored to ensure that the carbon nanotubes do not flake off the substrate while a sufficient force is applied in order to reorient the carbon nanotubes. The shear force could also be applied with a cylindrical tool (i.e. a roller) that is rolled along the surface of the metallic substrate on which the carbon nanotubes are formed. In particular, the shear force can be applied by moving the metallic substrate with the carbon nanotubes between a pair of rollers. This is a particularly effective approach when there are carbon nanotubes present on two sides of the substrate.

It is particularly preferred that the first direction in which the shear force is applied is along a surface on which the carbon nanotubes are formed. This has the effect of laying down the carbon nanotubes so that they become more aligned with the surface of the substrate, rather than being perpendicular to the substrate. This allows reorientation of any nanotubes on the upper and/or lower surface to be in a similar orientation to those within the openings. It is particularly preferred that the first direction is substantially perpendicular to the longitudinal axis of any elongate shapes of the openings that are present.

It is particularly preferred that the longitudinal axis of any elongate shapes of the openings are substantially perpendicular to the rotational axis about which the metallic substrate is rolled up in any rolling step. Further, the first direction associated with any application of a shear force is preferably substantially parallel to the rotational axis about which the metallic substrate is rolled up in the rolling step. When a bobbin is utilised, this is the rotational axis of the bobbin. In this manner, it can be ensured that all of the carbon nanotubes have been substantially aligned in roughly the same direction so they should all point approximately along the rotational axis, e.g. the length of the bobbin.

When forming a conductive tape, it is particularly preferred that the longitudinal axis of any elongate shapes of the openings are substantially perpendicular to the longitudinal direction of the final conductive tape. Further, the first direction associated with any application of a shear force is preferably substantially parallel to the longitudinal direction in the final conductive tape.

The drawing direction is the direction along which the insert is drawn in the drawing step. The longitudinal axis of any elongate shapes of the openings may be substantially perpendicular, or the first direction associated with any application of a shear force may be substantially parallel, to the drawing direction of the drawing step. The carbon nanotubes may be substantially aligned along the drawing direction of the drawing step. This can be achieved by inserting the bobbin into a sleeve such that the rotational axis, and the carbon nanotubes are oriented along the longitudinal direction of the insert, i.e. its elongate axis. Accordingly, the insert can then be drawn along this elongate axis during the drawing step. During the drawing step the insert's length is increased and its cross-sectional area is reduced.

The final conductive element after the drawing step can be scanned and cut appropriately to remove any part which does not contain the required carbon nanotubes. This may be caused by the greater length of the sleeve relative to the bobbin before the drawing step.

It is desired to have the carbon nanotubes substantially aligned along the drawing direction since this starts the carbon nanotubes having an orientation along the elongate axis of the final product. This is a preferred orientation for conduction to occur. Regardless, the drawing step itself can cause the carbon nanotubes to align themselves to some degree along the drawing direction due to the flow of the matrix material compared to the relatively stiff carbon nanotubes. In this way, the step of applying a shear force in a first direction to the carbon nanotubes on the metallic substrate can occur as part of the drawing step where the shear force associated with the drawing step occurs in the drawing direction. Without wishing to be bound by theory, it is believed that the drawing approach can also lead to relative movement between the walls of a multi-walled carbon nanotube. This can lead to telescoping of the nanotubes improving alignment. Accordingly, the present method can lead to close alignment, or super alignment, of the carbon nanotubes in the final conductive element.

Following the drawing step there can be an annealing step. The annealing step holds the drawn product at an elevated temperature in order to remove or reduce hardening or internal stresses that may have been introduced during the drawing stage. Annealing can also be used to grow the grain size of the metallic components. This reduces the presence of grain boundaries and improves conductivity properties. The annealing temperature may be any suitable temperature, for example a temperature between 400 °C and 700 °C, or between 550 °C and 800 °C. Annealing can be carried out at approximately 700 °C. The annealing step preferably occurs in a low oxygen, or substantially oxygen free environment. For example, the annealing may occur in an argon or nitrogen environment. When the metallic substrate is formed from copper, the annealing temperature may be in the range of 400 °C and 700 °C, and most preferably the annealing temperature is 550 °C.

It is possible that the drawing and annealing steps can be repeated several times so as to gradually reduce down the diameter of the drawn product and increase its length, i.e. drawing followed by annealing, followed by further drawing and then further annealing etc. This is a standard approach for producing an elongated conductor such as a wire. The drawing step can be conducted so as to reduce the diameter of the wire by between 5% and 60% between annealing steps. It is particularly preferred that the conductive element is in the form of a wire in the present invention. A wire is a conductive element that is usually a cylindrical and flexible strand of metal.

In relation to the drawing step, the insert can be drawn through a selection of ever decreasing die sizes. By pulling the insert through a die, its diameter is reduced and its length is increased. The drawn product can be annealed after several drawing applications or after each drawing application. The drawing step may comprise pulling the insert over 10 times, or over 15 times, or over 20 times through ever decreasing dies. The dies may be made from high speed steel, hardened steel or tungsten carbide.

As an initial stage of the drawing step, the insert can be subjected to a compression step (e.g. by rotary swaging or rolling) so as to deform the insert into a smaller diameter. This can assist in compacting the separate regions of the insert together. This in turn can help avoid the formation of voids during the rest of the drawing step as the length of the insert increases. The compression step can remove or substantially reduce any voids between the sleeve and the bobbin and the rolled-up foil and between the layers in the foil. This step results in a reduction of the diameter, and an increase in the length, of the insert, and improves the efficiency of the drawing step

The plurality of carbon nanotubes utilised in the present invention preferably comprises multi-walled carbon nanotubes. These carbon nanotubes are constituted of multiple carbon nanotubes nested within each other. This form of nanotube is particularly effective at contributing to the electrical conductivity of the resulting product.

The present invention also relates to a conductive element precursor, an insert and a conductive element formed by the methods described herein.

The conductive element described herein may be insulated with an insulating sleeve. The insulating sleeve can be any suitable insulating material, such as silicone rubber, polyvinyl chloride, or PTFE.

Also described is a conductive element precursor comprising a matrix, wherein the matrix comprises a metallic material; and a plurality of carbon nanotubes within the matrix, wherein the plurality of carbon nanotubes are substantially aligned.

The plurality of carbon nanotubes may be substantially aligned parallel to the outer surface. This increases the ease with which the precursor can be processed into a conductive element.

Also described is an insert comprising a matrix, wherein the matrix comprises a metallic material; and a plurality of carbon nanotubes within the matrix, wherein the plurality of carbon nanotubes are substantially aligned along a longitudinal axis of the insert.

Also described is an elongate conductive element comprising a matrix, wherein the matrix comprises a metallic material; and a plurality of carbon nanotubes within the matrix, wherein the plurality of carbon nanotubes are substantially aligned along a longitudinal axis of the elongate conductive element.

As noted herein, also described is a conductive element comprising a matrix, wherein the matrix comprises a metallic material; a first plurality of carbon nanotubes within the matrix, wherein the first plurality of carbon nanotubes are substantially aligned with each other; and a second plurality of carbon nanotubes within the matrix, wherein the second plurality of carbon nanotubes are substantially aligned with each other, and wherein the first plurality of carbon nanotubes are not substantially aligned with the second plurality of carbon nanotubes.

In addition to the first and second pluralities, there may be a further plurality, or pluralities, of carbon nanotubes that are substantially aligned with each other and not substantially parallel to any of the other plurality of carbon nanotubes. In particular, there may be three such pluralities of carbon nanotubes, or four such pluralities of carbon nanotubes. This advantageously allows the properties of the conductive element to be tailored in an increasing number of distinct directions.

The first plurality of carbon nanotubes may account for at least 10% of the total carbon nanotubes within the matrix, and the second plurality of carbon nanotubes may account for at least 10% of the total carbon nanotubes within the matrix. Further, each of any further pluralities of aligned carbon nanotubes may account for at least 10% of the total carbon nanotubes within the matrix. Each of the first, second and any further pluralities of aligned carbon nanotubes may account for at least 15%, 20%, 25% or preferably at least 30% of the total carbon nanotubes within the matrix.

The matrix of the conductive element and the conductive element precursor refers to a substantially continuous region. The matrix encompasses the plurality of carbon nanotubes.

The elongate conductive element's longitudinal axis is along the elongate direction. For example, when the elongate element is in the form of a wire, the longitudinal axis runs along the length of the wire.

The conductive element and the insert may have a plurality of distinct carbon nanotube layers along a cross-section of the matrix due to the manner in which they were made. For example, the rolling step means that along the cross-section of the matrix, perpendicular to the longitudinal axis, there are layers containing the carbon nanotubes, which may be separated by regions that are free of carbon nanotubes. These carbon nanotube layers are distinct from the rest of the matrix and can be identified by microscopy or x-ray diffraction.

The features described in relation to any method herein are also applicable to any final elongate conductive element described herein. For example, the matrix of conductive material can be a metallic material and may be copper. Further where it is stated that nanotubes are substantially aligned, the tolerance given above applies equally to the product.

Overall, a particularly preferred approach of the present invention utilises a metallic substrate with a plurality of openings with a ceramic layer, upon which the carbon nanotubes are grown. These carbon nanotubes are retained on the substrate and an initial decorating step is performed using CVD to deposit a metallic material throughout the carbon nanotubes, and optionally a doping step using CVD to deposit halogen particles throughout the carbon nanotubes. The coating of the carbon nanotubes is completed by using an electroplating approach to ensure that the carbon nanotubes are fully encapsulated. This results in a conductive element precursor.

The present invention will now be described in relation to the following specific example along with the drawings.
Figure 1 shows a substrate for use with the present invention with a plurality of openings and a detail of the openings.
Figure 2 is a detail of a further substrate for use with the present invention.
Figure 3 is a detail of a further substrate for use with the present invention.
Figure 4 is an SEM image of the surface of the deposited silica layer on a copper foil.
Figure 5 is a schematic depiction of a perspective cross-section of the substrate of the present invention with carbon nanotubes grown thereon.
Figure 6 is an SEM image of the surface of the deposited silica layer on a copper foil where the silica layer has been cracked to demonstrate its thickness for the purpose of the illustration.
Figure 7 is an SEM image of the carbon nanotubes grown on a copper foil with openings cut into the foil.
Figure 8 is an SEM image of the carbon nanotubes grown on a further copper foil with openings.
Figure 9 is an SEM image showing the cross-section of the copper foil of figure 7.
Figure 10 is an SEM image of carbon nanotubes with deposited copper particles.
Figure 11 schematically depicts the step of applying a shear force to the grown carbon nanotubes.
Figure 12 is a schematic depiction of the equipment used in the electroplating process.
Figure 13 is a schematic depiction of the current profile applied for the electroplating step.
Figure 14 is an SEM image of carbon nanotubes coated with copper following electroplating.
Figure 15 schematically depicts a bobbin that can be used with the present invention.
Figures 16 and 17 schematically depict the metallic substrate being wound onto a recess in the bobbin.
Figure 18 schematically depicts a sleeve that can be used with the present invention.
Figure 19 schematically depicts a cross-section of the sleeve containing the bobbin.
Figure 20 schematically depicts the wire-drawing step.
Figure 21 schematically depicts a cross-section through the final wire.

### Substrate preparation

The substrate used is a thin copper foil ribbon. The term "ribbon" is used due to the copper foil's long length relative to its width. Copper ribbon with thicknesses of 50 µm, 100 µm, 200 µm and 400 µm were obtained and a plurality of openings formed in each using a laser cutting technique.

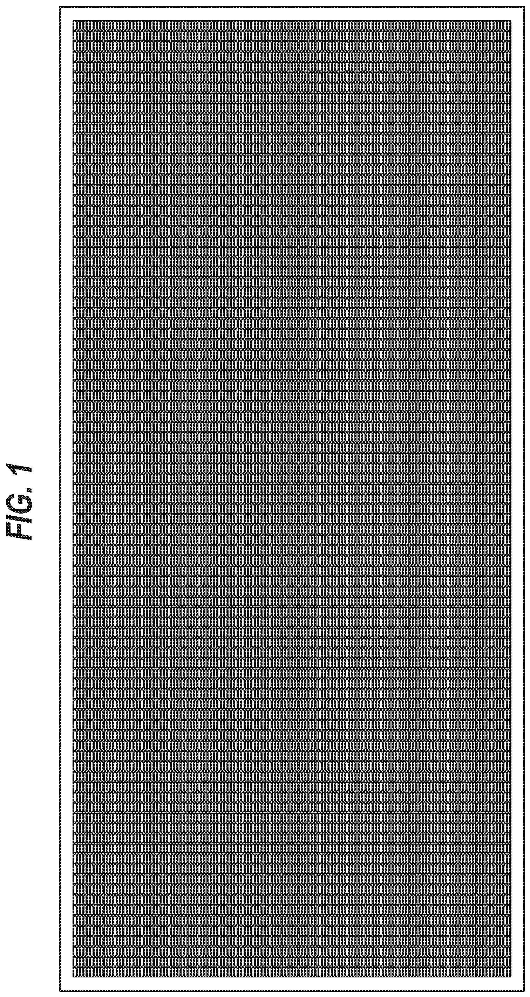

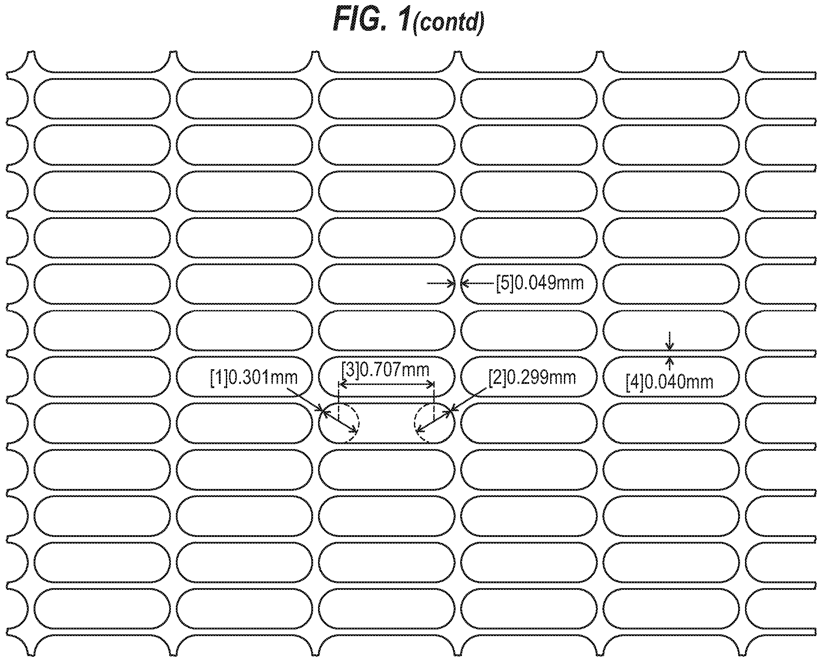

A resulting substrate is depicted in figure 1, here the openings are in the form of elongate shapes on the upper and lower surfaces of the substrate. Each opening of the plurality of openings has the same elongate shape. The elongate shape has two parallel sides that are approximately 0.7 mm long where the elongate shape has a total length of about 1 mm. The parallel sides are separated by about 300 µm. These parallel sides are connected at their first and second ends by circular sections. There is plane of symmetry along the longitudinal axis of the elongate shape between the two parallel sides (the longitudinal axis running horizontally across the figure). All of the longitudinal axes of the openings are parallel to each other. The shortest distance between adjacent openings is 40 µm. The elongate shapes are present in a repeating pattern across the upper surface of the substrate. The pattern will mean that carbon nanotubes are predominantly aligned perpendicular to the longitudinal axis in the vertical direction on the figure in relation to carbon nanotubes aligned within the plane of the substrate.

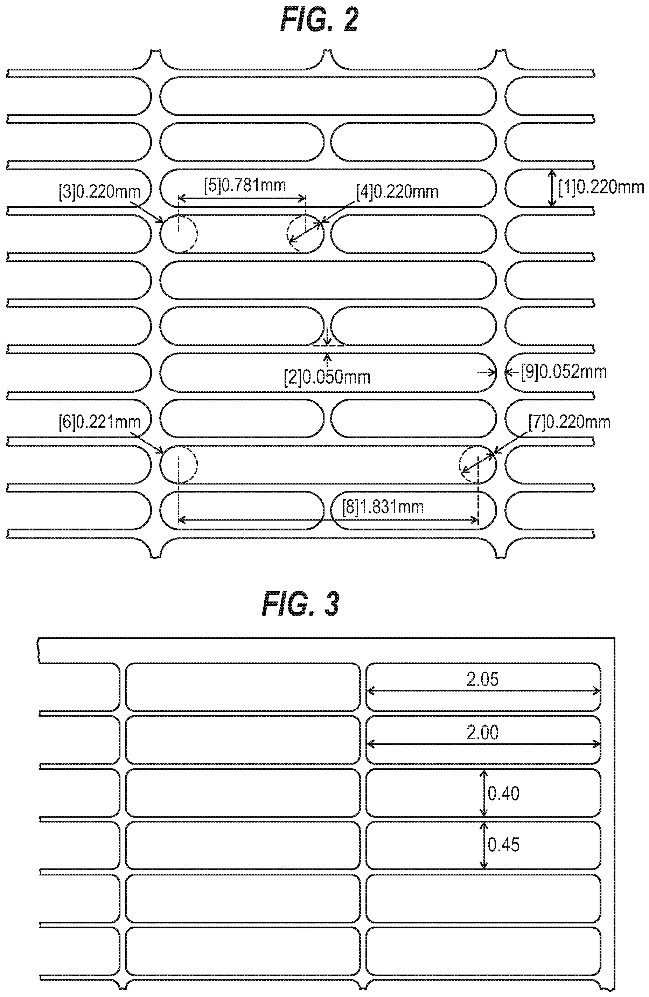

An alternative pattern of openings was also cut (figure 2). This pattern had a plurality of elongate shapes, where one subset of elongate shapes has a length of almost 1 mm and the other subset has a length of about 2 mm. The shortest distance between adjacent openings is 50 µm and the openings are arranged in a repeating pattern across the substrate. The incorporation of longer elongate shapes increases the proportion of carbon nanotubes that can be grown on the substrate.

A further pattern of openings was also cut (figure 3). This pattern has greater a distance between the parallel sides of the elongate shape of 400 µm and the openings have an elongate shape that is in the form of a rectangle where each corner is a rounded corner. The elongate shapes are 2 mm long.

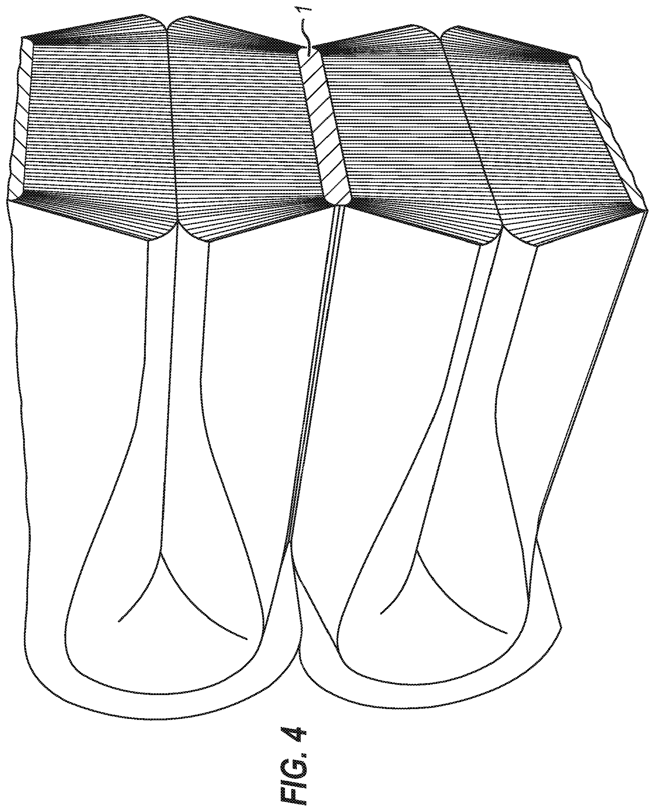

A schematic depiction of the growth of carbon nanotubes on such a substrate with openings is shown in the cross-sectional view of figure 4. Here the thickness of the substrate 1 is much greater than the distance between adjacent openings on the upper surface. The vast majority of the carbon nanotubes can be seen as oriented in the plane of the substrate 1 and perpendicular to the walls of the openings. Due to the elongate shape of the openings the vast majority of the carbon nanotubes are oriented perpendicular to the longitudinal axes of the openings.

### Silica deposition:

The ribbon is clamped into a copper, or brass, sample holder. The sample holder is introduced in a first reactor chamber through a side door, where it sits on the rails that will ensure its translation to the next chamber. The deposition chamber is closed and evacuated and backfilled with argon several times to remove most of the oxygen and moisture. The pressure is then set to a value of about 5 mbar with a steady argon flow of 1 SLM.

The reactor chamber is heated and when the temperature reaches 650 °C, the precursor injection can take place. The injection frequency is 50 Hz, with an opening time of 0.7 ms. A solution of 0.1 M TEOS in anhydrous toluene is injected in the evaporating vessel, which is heated at 190 °C. A 2 SLM Ar carrier gas flow is run through the evaporator. After 15 minutes of injection, the flow of precursor is interrupted, and the chamber evacuated several times to remove the remaining traces of precursor solution.

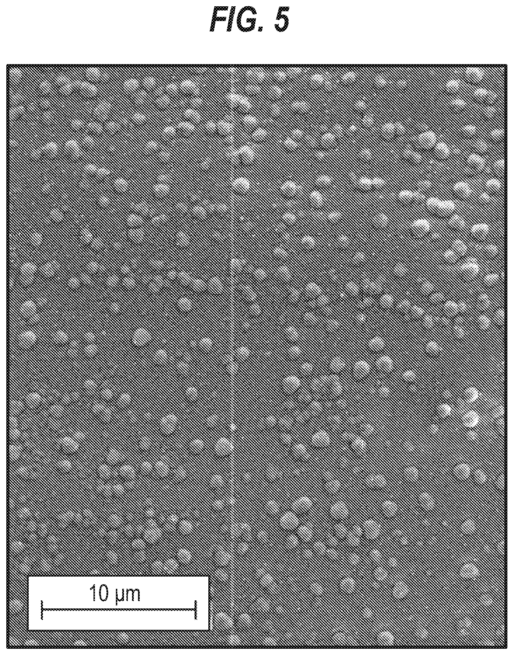

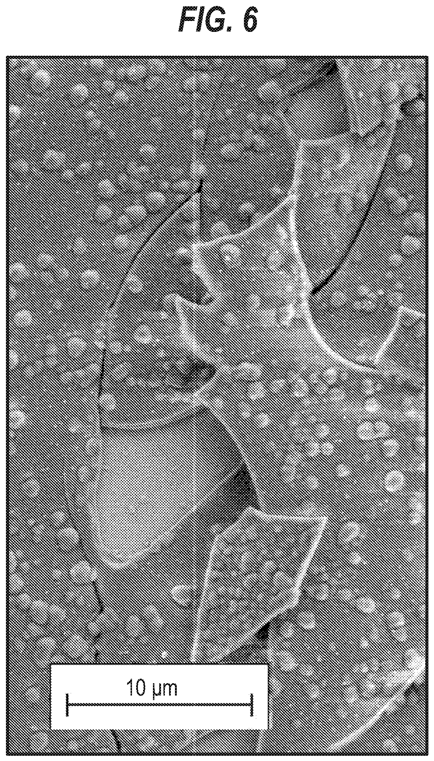

The obtained silica layers are 400 nm thick on average, and very smooth, as the SEM micrograph of figure 5 shows, which was performed on a substrate with no openings. Figure 6 demonstrates a section where the silica layer has been deliberately cracked to expose the underlying copper foil for illustration purposes. In practice, to avoid cracking, the elevated temperature of the metallic substrate can be maintained between the deposition of the silica layer and the next carbon nanotube forest growth step.

### Carbon nanotube forest growth:

Once the cleaning is finished, the pressure in the chamber is raised by filling with argon gas and once atmospheric pressure is reached, the sample holder is transferred to the next chamber through a gate valve. Once the sample is in the second chamber and the gate valve locked, the carbon nanotube injection process can begin. The precursor of a 3%wt solution of ferrocene in toluene, injected along the same process as the silica precursor. The injection parameters are 0.7 ms opening time, 25 Hz frequency and 3 SLM Ar carrier gas flow. The pre-heating furnace taking place in between the evaporator and the deposition chamber is heated at 725 °C. The process lasts for 10 minutes. Once the process is finished, the copper ribbon is cooled down, and the chamber is evacuated and filled back with argon to remove the traces of precursor remaining.

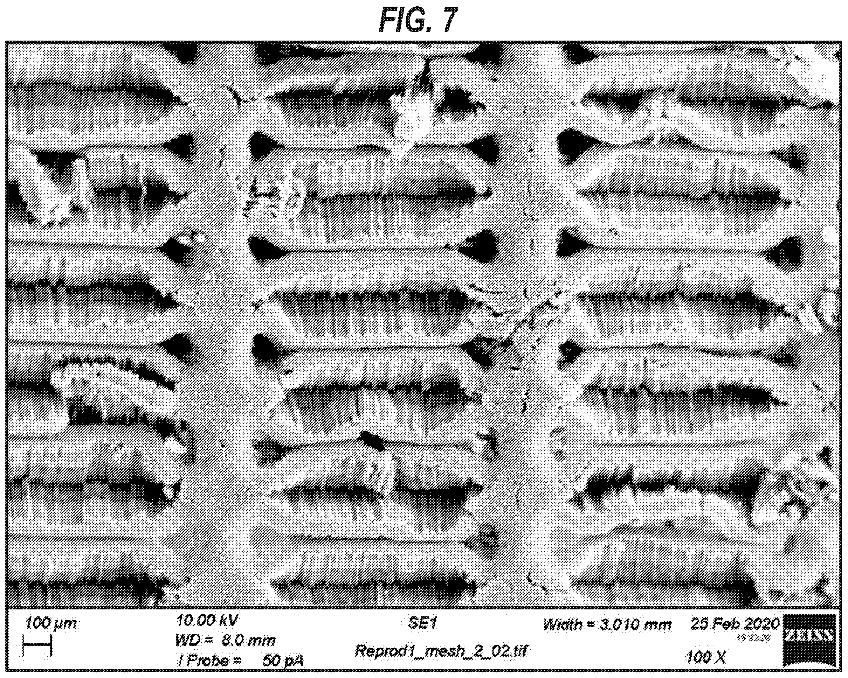

The carbon nanotube forests grown on the substrate of figure 1, with a 100 µm substrate thickness is shown in figure 7. The alignment of the carbon nanotubes in the plane of the substrate can be seen as well as carbon nanotubes that have grown upwards from the upper surface.

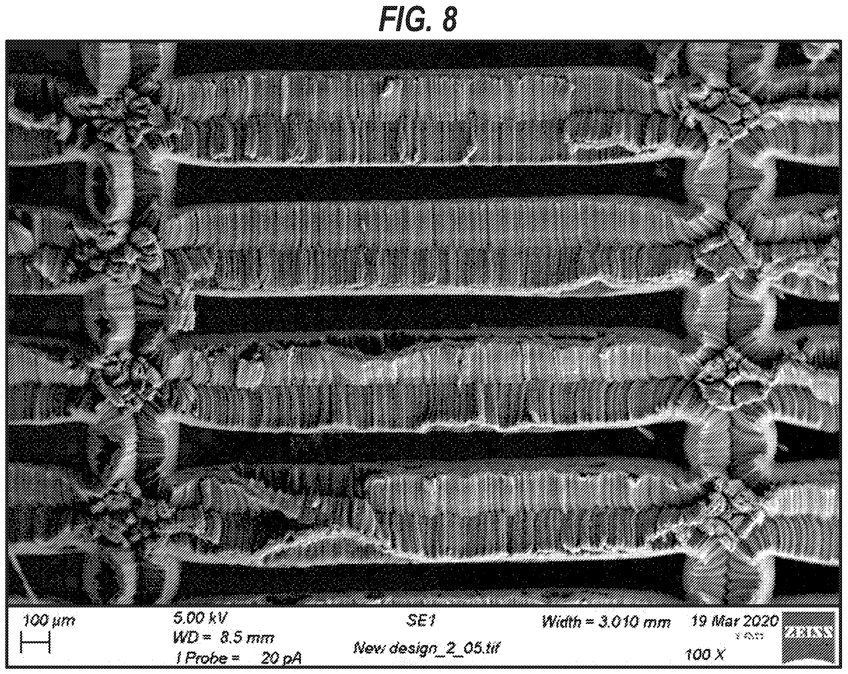

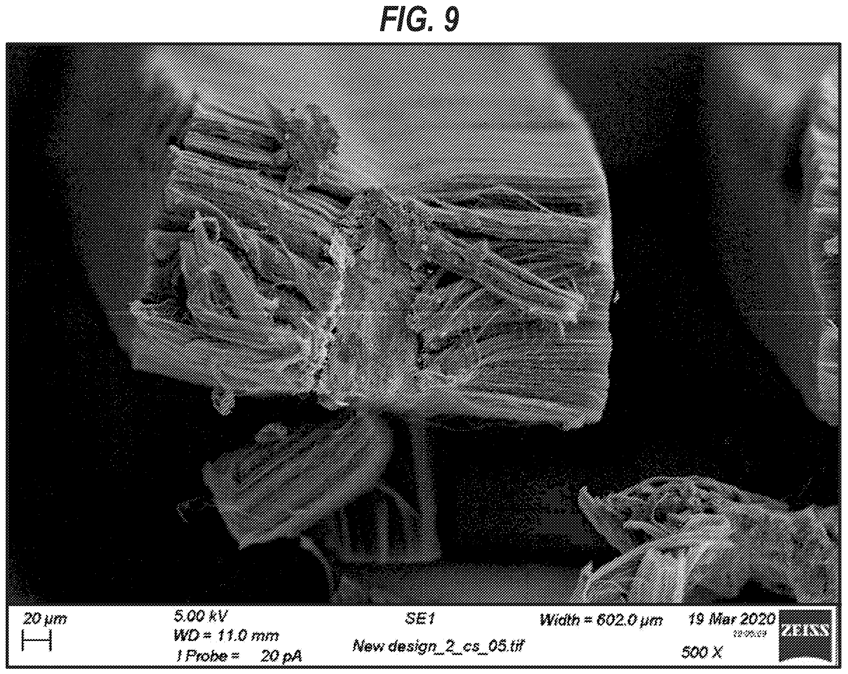

To investigate the arrangement, carbon nanotubes were grown on the substrate of figure 3 and growth stopped before the carbon nanotubes grew across the full width of the opening in figure 8. Again, the growth of the carbon nanotubes across the elongate shape can be seen illustrating a strong preferential alignment within the plane of the substrate. Details of the nanotubes growing from the walls of the opening are also seen (figure 9)

### Loose carbon nanotube cleaning:

Once the carbon nanotube forest growth process is finished, the sample holder is transferred to an intermediate cleaning chamber through another gate valve. There, it is submitted to a high argon flow to blow away any loose CNT. Once this step completed, it is transferred to the third deposition chamber.

### Metallic seeding:

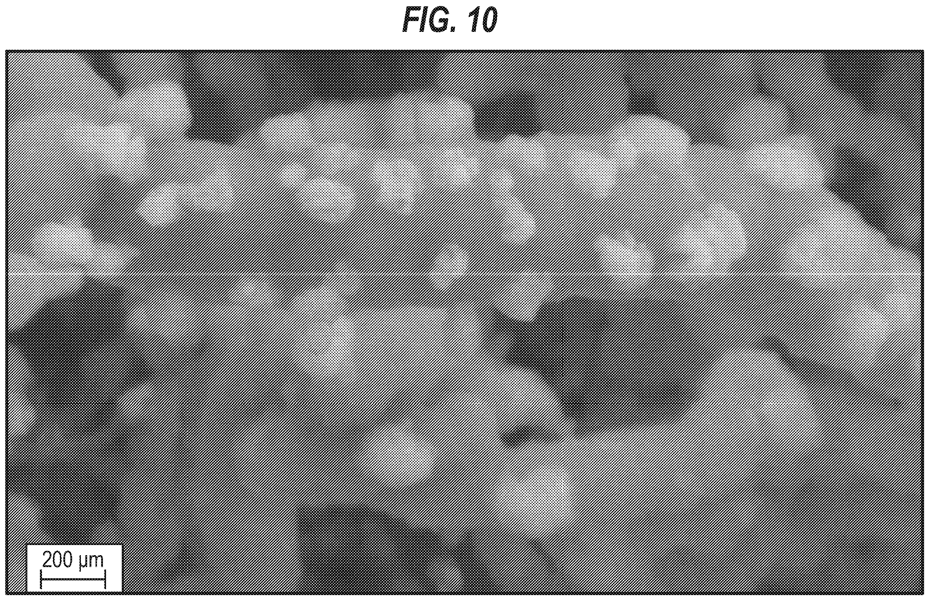

When the sample is in position in the third chamber, the pressure is lowered again to 160 mbar, and a stream of precursor is injected in the chamber along the same process as for the silica deposition. The precursor solution injected is a 0.25 M solution of Cu(acac)₂ in toluene, with a pulse length of 0.7 ms and a frequency of 25 Hz. The carbon nanotube forest is then decorated by copper nanoparticles, as shown in figure 10. This step allows a better deposition of the copper into the thickness of the carpet during the next step.

The third deposition chamber is then evacuated, flushed with argon and increased to atmospheric pressure. The sample holder is then extracted through a side door.

### Optional halogen doping

Iodine is used as a doping halogen and is injected using a solution of iodoethane (C₂H₅I) in toluene: two parts of iodoethane for one part of toluene. The injection takes place during the copper seeding step. Firstly, the copper precursor is injected for 20 minutes, then the iodine-containing solution is injected using the same parameters until 15 ml of solution has been injected, then copper injection is resumed.

### Optional carbon nanotube reorientation:

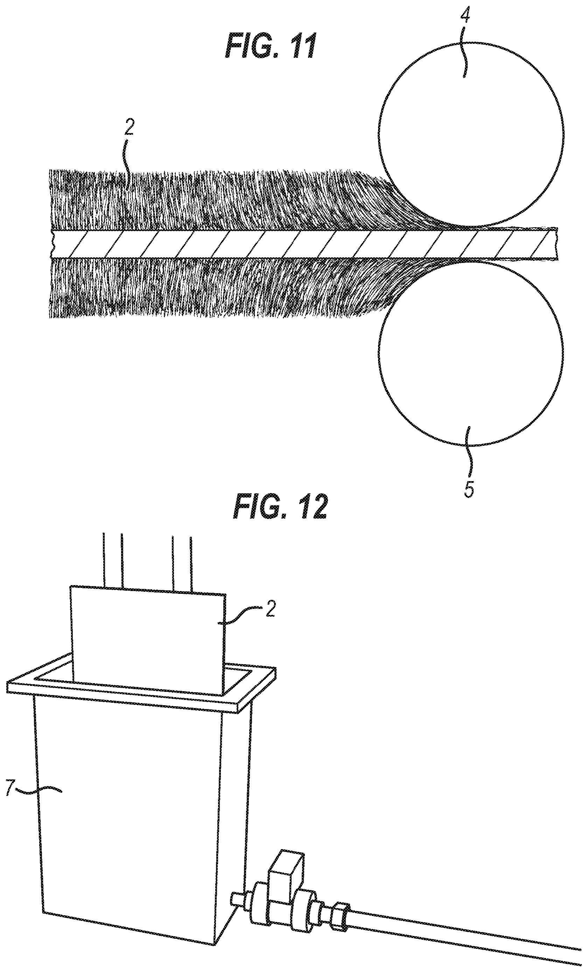

The coated foil ribbons are removed from the sample holder, and the carbon nanotube forest of both sides are laid down by passing the coated ribbon 2 in between two rotating smooth quartz cylinders 4, 5 along the width dimension of the ribbons, as illustrated in figure 11. This allows the carbon nanotubes to be oriented coaxially to the subsequent drawing process.

### Copper infiltration:

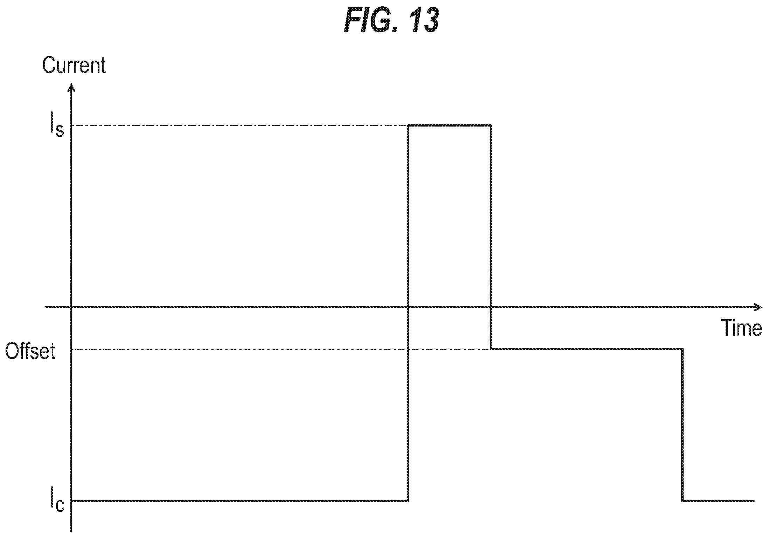

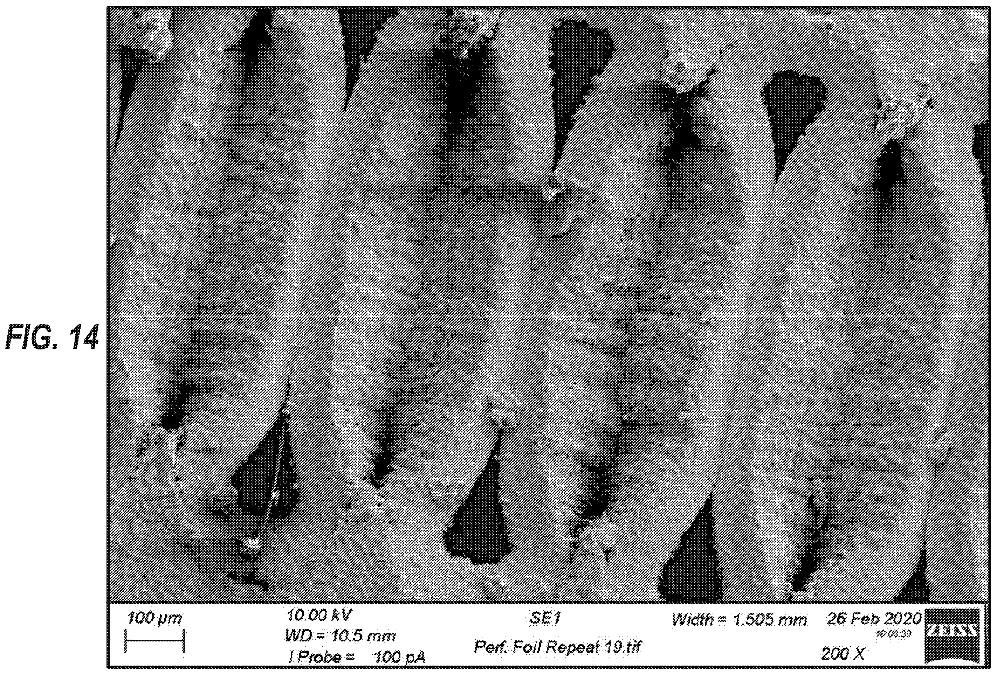

The ribbon 2 with the oriented carbon nanotube forest is then installed in a rack and dipped into an electroplating bath 7, as depicted in figure 12. This bath is composed of a solution of 0.56 mol/I CuSO₄ aqueous solution, with 0.67 mol/I sulphuric acid, 0.0027 mol/I sodium chloride. The volume of this solution in the bath is 250 ml with an addition of 5 ml of N-methyl pyrrolidone (NMP), 5 ml of methanol and 0.1 g sodium dodecyl sulphate (SDS). A current is established in between the coated copper ribbon and a pure copper anode in order to electroplate the carbon nanotube forest with copper. The current is imposed and the potential adjusted, as usually done for copper electroplating, and described in Schneider, Weiser, Dörfer et al. (2012), Surface Engineering, vol. 28, issue 6, pages 435 to 441. In order to improve the copper deposition inside the forest, the current follows a pulse-reversed pattern (as described in "Mechanical Properties of Carbon Nanotubes/Metal Composites" doctoral dissertation by Ying Sun, University of Central Florida, 2010), with a slight offset to maintain an electromigration force applied to the copper ions during the non-depositing time. Figure 13 shows the typical pattern used, where I_{C} is the plating current, I_{S} is the stripping current, with the offset allowing electromigration of the copper ions without plating. The fully plated carbon nanotubes are illustrated in figure 14.

### Wire drawing:

The insert is optionally first compressed (e.g. by using a rotational swaging machine or hot or cold rolling machine) until all voids in the insert are substantially eliminated.

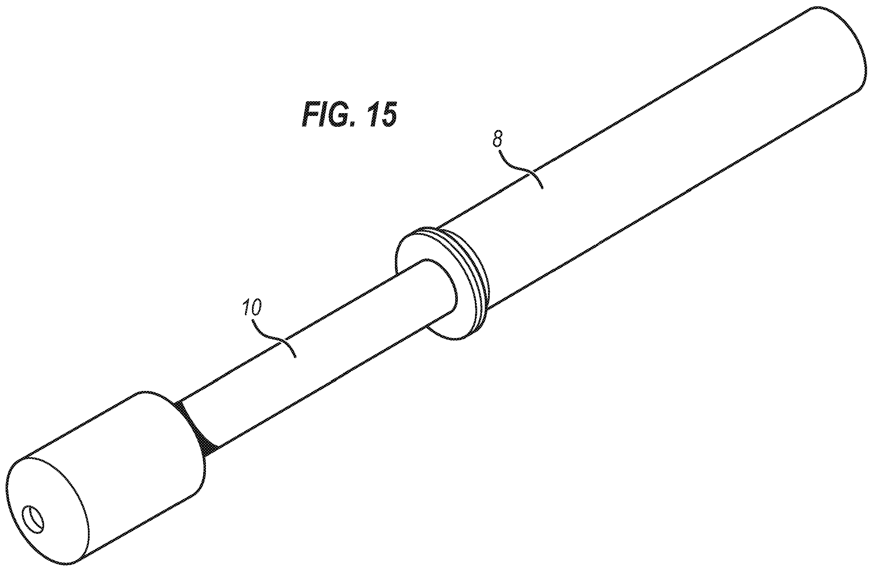

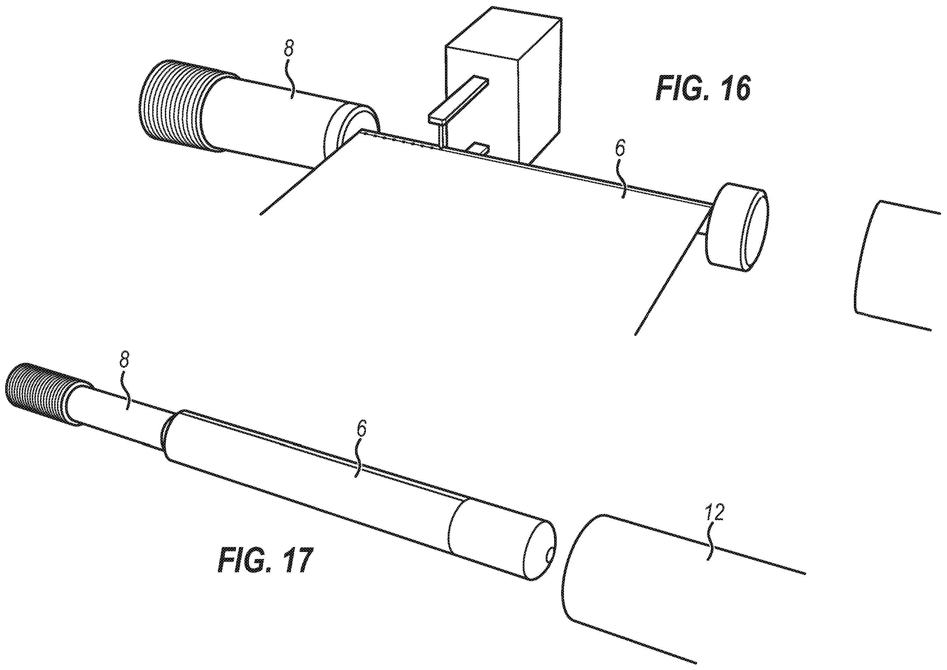

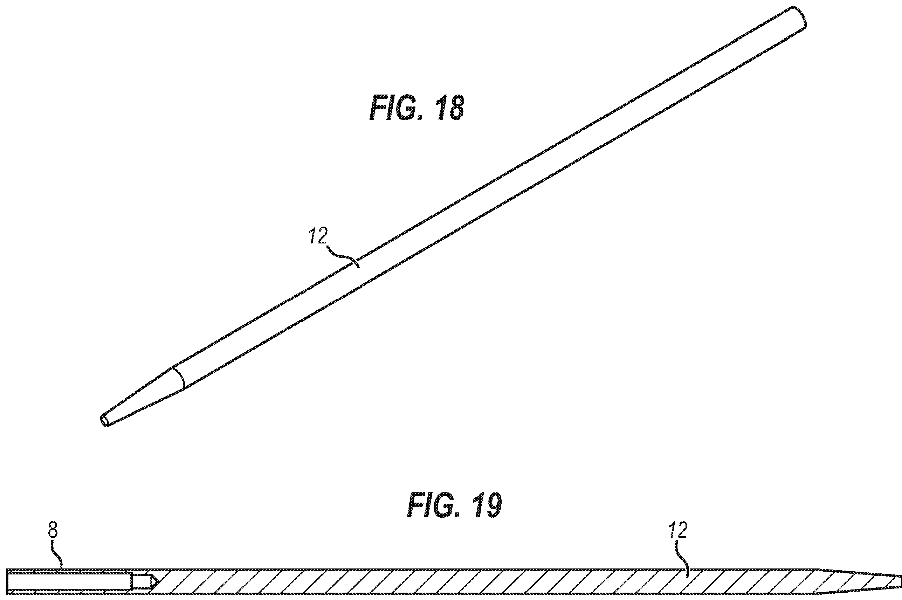

The wire drawing process is carried out using a copper substrate that has a length of 300 mm and a width of 100 mm. This substrate has undergone the above steps to form copper nanotubes on the two major opposing surfaces of the substrate. A bobbin 8 with a recessed region 10 for receiving the wound substrate is provided as shown in figure 15. The substrate 6 is then wound onto a bobbin 8 to form a bobbin of 18 mm in diameter. This is depicted in figures 16 and 17. This bobbin 8 is slid into a sleeve 12 by sliding it into a cavity in one of the sleeve's ends. The sleeve has an outer diameter of 22 mm and a length of 500 mm and is depicted in figure 18. The sleeve 13 with the bobbin 8 inside is depicted in figure 19. The carbon nanotubes have been laid down to be substantially aligned along the length of the insert.

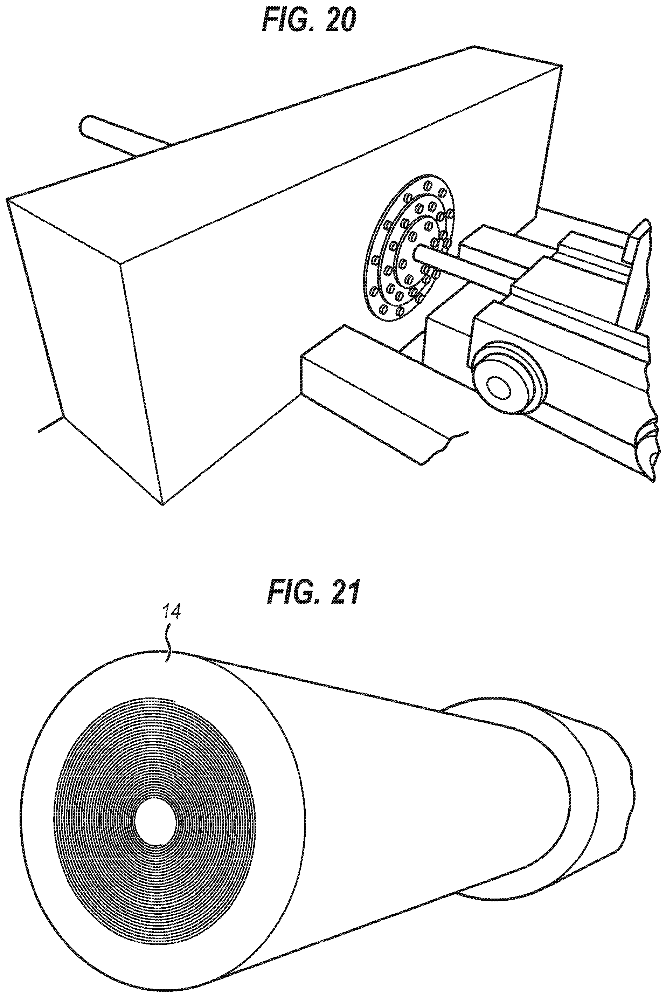

The insert is then drawn on a drawbench to achieve a 10% reduction in the insert's diameter, as depicted in figure 20. The drawn billet is then annealed in an argon atmosphere at a temperature of 550 °C.

The steps of drawing and annealing are repeated until the insert's diameter has been reduced to 8 mm and the length has been increased to 3.75 m.

X-ray analysis is then conducted on the insert's ends so as to identify and cut off the sections that are pure copper (due to the greater length of the billet compared to the substrate prior to drawing). This insert is then run through a rod breakdown machine to reduce to the diameter to 2 mm. This is then drawn down to 1 mm using a wire drawing machine and the wire is then spooled. The final length of the wire in this example is approximately 50 m.

Figure 21 shows a depiction of the final wire, where there is a copper matrix 14, within which there are layers of carbon nanotubes separated by layers which do not contain carbon nanotubes. The pattern of the carbon nanotube layers was introduced in the rolling up process.

In addition to the combination of features recited in the claims, the various features described herein can be combined in any compatible manner.

## Claims

1. A conductive element precursor comprising
a metallic substrate, wherein the metallic substrate has an upper surface and a lower surface, and a plurality of openings, wherein each of the plurality of openings is defined by a wall extending through the substrate between the upper surface and the lower surface; and
a plurality of carbon nanotubes, wherein the plurality of carbon nanotubes is grown on the wall of each of the plurality of openings, wherein each of the plurality of openings forms a shape on the upper surface of the substrate, wherein the shapes of the plurality of openings comprises a shape that comprises a circular section, and wherein the shapes of the plurality of openings comprises an elongate shape, wherein the elongate shape has a longitudinal axis,
optionally wherein each of the plurality of openings forms a shape on the lower surface of the substrate corresponding to the shape on the upper surface of the substrate, further optionally wherein each of the plurality of openings has a substantially constant cross-section from the upper surface to the lower surface.

2. The conductive element precursor of claim 1, wherein the elongate shape comprises two parallel sides, optionally wherein the two parallel sides of the elongate shape are within 5° of parallel to the longitudinal axis of that elongate shape.

3. The conductive element precursor of claim 2, wherein
(i) the elongate shape with two parallel sides further comprises a first circular section, wherein the first circular section connects a first end of one of the parallel sides with a first end of the other parallel side,
optionally wherein the elongate shape with two parallel sides further comprises a second circular section, wherein the second circular section connects a second end of one of the parallel sides with a second end of the other parallel side, further optionally wherein the elongate shape has a plane of symmetry located between the parallel sides and running parallel to the parallel sides, yet further optionally wherein the parallel sides each have a length of greater than 0.5 mm
or
(ii) the elongate shape is in the form of a rectangle, wherein each corner is a rounded corner, optionally wherein the elongate shape has a plane of symmetry located between the parallel sides and running parallel to the parallel sides, further optionally wherein the parallel sides each have a length of greater than 0.5 mm.

4. The conductive element precursor of claim 2 or claim 3, wherein the distance between the parallel sides of the elongate shape is between 50 µm to 500 µm.

5. The conductive element precursor of any preceding claim, wherein
(i) the shapes of the plurality of openings comprises a plurality of the elongate shapes, wherein the longitudinal axis of each of the elongate shapes are within 5° of parallel to each other, optionally wherein the longitudinal axis of each of the elongate shapes are within 5° of parallel to an edge of the upper surface,
or
(ii) the shapes of the plurality of openings comprises a first plurality of the elongate shapes and a second plurality of the elongate shapes, wherein the longitudinal axis of each of the first plurality of elongate shapes are within 5° of parallel to each other and the longitudinal axis of each of the second plurality of elongate shapes are within 5° of parallel to each other, wherein the longitudinal axes of the first plurality of elongate shapes are not within 5° of parallel to the longitudinal axes of the second plurality of elongate shapes.

6. The conductive element precursor of any preceding claim, wherein
(i) the shapes of the plurality of openings comprise two or more different shapes, and/or
(ii) the plurality of openings form a repeating pattern on the upper surface of the substrate, and/or
(iii) the shortest distance between adjacent openings is 100 µm or less, optionally wherein the shortest distance between adjacent openings is perpendicular to the longitudinal axis of an elongate shape, and/or
(iv) the plurality of openings account for 70% or more of the area of the region of the upper surface within which the openings are present, and/or
(v) the upper surface and the lower surface are separated by a distance that is the thickness of the substrate, and wherein the thickness is 0.5 mm or less, and/or
(vi) the substrate has a length that extends along the upper surface and a width that extends along the upper surface, wherein the length is perpendicular to the width, and wherein the length-to-width ratio is 2:1 or greater, and/or
(vii) the upper surface and lower surface are separated by a distance that is the thickness of the substrate and where the shortest distance between adjacent openings is less than the thickness of the substrate, and/or
(viii) additional carbon nanotubes are formed on the upper surface and the lower surface, and/or
(ix) carbon nanotubes of the plurality of carbon nanotubes are at least partially coated with a metallic material, optionally wherein the metallic material comprises copper, and/or
(x) the metallic substrate comprises copper.

7. The conductive element precursor of any preceding claim, wherein the metallic substrate is configured such that the conductive element precursor can be rolled up.

8. An insert comprising the conductive element precursor of claim 7, wherein the conductive element precursor is in a rolled-up configuration, optionally wherein the conductive element precursor is rolled round a rotational axis such that the rotational axis is perpendicular to the longitudinal axis of an elongate shape.

9. A method of producing a conductive element precursor, the method comprising the following steps:
obtaining a metallic substrate, wherein the metallic substrate has an upper surface and a lower surface, and a plurality of openings, wherein each of the plurality of openings is defined by a wall extending through the substrate between the upper surface and the lower surface, wherein each of the plurality of openings forms a shape on the upper surface of the substrate, and wherein the shapes of the plurality of openings comprises an elongate shape, wherein the elongate shape has a longitudinal axis, and wherein the shapes of the plurality of openings comprises a shape that comprises a circular section; and
growing a plurality of carbon nanotubes on the walls of each of the plurality of openings,
optionally wherein the step of growing the plurality of carbon nanotubes utilises chemical vapour deposition.

10. The method of claim 9, further comprising the step of coating carbon nanotubes of the plurality of carbon nanotubes with a metallic material, optionally wherein the step of coating the carbon nanotubes comprises electroplating, further optionally wherein the step of coating the carbon nanotubes comprises decorating the carbon nanotubes with the metallic material via chemical vapour deposition and then subsequently electroplating the carbon nanotubes with the metallic material.

11. The method of claim 9 or claim 10, wherein the step of obtaining a metallic substrate comprises the steps of
providing a metallic substrate; and
removing material from the metallic substrate to form the plurality of openings, optionally wherein the step of removing material utilises laser cutting.

12. The method of any one of claims 9 to 11, wherein the method forms the conductive element precursor of any one of claims 1 to 7.

13. A method of producing an insert, the method comprising producing the conductive element precursor according to any one of claims 9 to 12; and further comprising the step of rolling up the substrate to form the insert,
optionally wherein the rolling step comprises rolling the substrate around a metallic bobbin, further optionally
(i) wherein the substrate is affixed to the metallic bobbin prior to the rolling step, and/or
(ii) wherein the metallic bobbin with the rolled substrate thereon is placed in a metallic sleeve to form the insert, optionally wherein the metallic bobbin and the metallic sleeve comprise copper.

14. A method of producing a conductive element, the method comprising producing the insert according to claim 13; and drawing the insert to increase its length and form the conductive element,
optionally (A) wherein
(i) the longitudinal axis of the elongate shape is perpendicular to a drawing direction of the drawing step, and/or
(ii) the method further comprises an annealing step following the drawing step, optionally the method further comprising additional drawing steps and additional annealing steps to form the conductive element;
and/or (B) wherein the conductive element is in the form of a wire.

15. A method of producing a conductive element, the method comprising producing the conductive element precursor according to any one of claims 9 to 12; and further comprising compressing the metallic substrate such as to form the conductive element.

16. A conductive element obtainable by the method of claim 14 or claim 15.

17. The conductive element precursor of any one of claims 1 to 7, the insert of claim 8, or the conductive element of claim 16, wherein the plurality of carbon nanotubes comprises multi-walled carbon nanotubes.

## Patentansprüche

1. Vorläufer eines leitfähigen Elements, umfassend
ein metallisches Substrat, wobei das metallische Substrat eine obere Oberfläche und eine untere Oberfläche und eine Vielzahl von Öffnungen aufweist, wobei jede der Vielzahl von Öffnungen durch eine Wand definiert ist, die sich zwischen der oberen Oberfläche und der unteren Oberfläche durch das Substrat erstreckt; und
eine Vielzahl von Kohlenstoffnanoröhren, wobei die Vielzahl von Kohlenstoffnanoröhren auf die Wand jeder der Vielzahl von Öffnungen aufgewachsen ist, wobei jede der Vielzahl von Öffnungen eine Form auf der oberen Oberfläche des Substrats bildet, wobei die Formen der Vielzahl von Öffnungen eine Form umfassen, die einen kreisförmigen Abschnitt umfasst, und wobei die Formen der Vielzahl von Öffnungen eine längliche Form umfassen, wobei die längliche Form eine Längsachse aufweist,
wobei gegebenenfalls jede der Vielzahl von Öffnungen eine Form auf der unteren Oberfläche des Substrats bildet, die der Form auf der oberen Oberfläche des Substrats entspricht, wobei gegebenenfalls ferner jede der Vielzahl von Öffnungen einen im Wesentlichen konstanten Querschnitt von der oberen Oberfläche zu der unteren Oberfläche aufweist.

2. Vorläufer eines leitfähigen Elements nach Anspruch 1, wobei die längliche Form zwei parallele Seiten umfasst, wobei gegebenenfalls die beiden parallelen Seiten der länglichen Form innerhalb von 5° von parallel zu der Längsachse dieser länglichen Form liegen.

3. Vorläufer eines leitfähigen Elements nach Anspruch 2, wobei
(i) die längliche Form mit zwei parallelen Seiten ferner einen ersten kreisförmigen Abschnitt umfasst, wobei der erste kreisförmige Abschnitt ein erstes Ende einer der parallelen Seiten mit einem ersten Ende der anderen parallelen Seite verbindet,
wobei gegebenenfalls die längliche Form mit zwei parallelen Seiten ferner einen zweiten kreisförmigen Abschnitt umfasst, wobei der zweite kreisförmige Abschnitt ein zweites Ende einer der parallelen Seiten mit einem zweiten Ende der anderen parallelen Seite verbindet, wobei gegebenenfalls ferner die längliche Form eine Symmetrieebene aufweist, die zwischen den parallelen Seiten angeordnet ist und parallel zu den parallelen Seiten verläuft, und wobei gegebenenfalls ferner die parallelen Seiten jeweils eine Länge von mehr als 0,5 mm aufweisen,
oder
(ii) die längliche Form in der Form eines Rechtecks vorliegt, wobei jede Ecke eine abgerundete Ecke ist, wobei gegebenenfalls die längliche Form eine Symmetrieebene aufweist, die zwischen den parallelen Seiten liegt und parallel zu den parallelen Seiten verläuft, wobei gegebenenfalls ferner die parallelen Seiten jeweils eine Länge von mehr als 0,5 mm aufweisen.

4. Vorläufer eines leitfähigen Elements nach Anspruch 2 oder Anspruch 3, wobei der Abstand zwischen den parallelen Seiten der länglichen Form zwischen 50 µm bis 500 µm beträgt.

5. Vorläufer eines leitfähigen Elements nach einem der vorstehenden Ansprüche, wobei
(i) die Formen der Vielzahl von Öffnungen eine Vielzahl der länglichen Formen umfassen, wobei die Längsachse jeder der länglichen Formen innerhalb von 5° von parallel zueinander liegt, wobei gegebenenfalls die Längsachse jeder der länglichen Formen innerhalb von 5° von parallel zu einem Rand der oberen Oberfläche liegt, oder
(ii) die Formen der Vielzahl von Öffnungen eine erste Vielzahl der länglichen Formen und eine zweite Vielzahl der länglichen Formen umfassen, wobei die Längsachse jeder der ersten Vielzahl von länglichen Formen innerhalb von 5° von parallel zueinander liegt und die Längsachse jeder der zweiten Vielzahl von länglichen Formen innerhalb von 5° von parallel zueinander liegt, wobei die Längsachsen der ersten Vielzahl von länglichen Formen nicht innerhalb von 5° von parallel zu den Längsachsen der zweiten Vielzahl von länglichen Formen liegen.

6. Vorläufer eines leitfähigen Elements nach einem der vorstehenden Ansprüche, wobei
(i) die Formen der Vielzahl von Öffnungen zwei oder mehr unterschiedliche Formen umfassen, und/oder
(ii) die Vielzahl von Öffnungen ein sich wiederholendes Muster auf der oberen Oberfläche des Substrats bildet, und/oder
(iii) der kürzeste Abstand zwischen benachbarten Öffnungen 100 µm oder weniger beträgt, wobei gegebenenfalls der kürzeste Abstand zwischen benachbarten Öffnungen senkrecht zu der Längsachse einer länglichen Form ist, und/oder
(iv) die Vielzahl von Öffnungen 70 % oder mehr der Fläche des Bereichs der oberen Oberfläche, in dem die Öffnungen vorhanden sind, ausmachen und/oder
(v) die obere Oberfläche und die untere Oberfläche durch einen Abstand getrennt sind, der die Dicke des Substrats ist, und wobei die Dicke 0,5 mm oder weniger beträgt, und/oder
(vi) das Substrat eine Länge aufweist, die sich entlang der oberen Oberfläche erstreckt, und eine Breite, die sich entlang der oberen Oberfläche erstreckt, wobei die Länge senkrecht zu der Breite ist und wobei das Längezu-Breite-Verhältnis 2:1 oder größer ist, und/oder
(vii) die obere Oberfläche und die untere Oberfläche durch einen Abstand getrennt sind, der die Dicke des Substrats ist, und wobei der kürzeste Abstand zwischen benachbarten Öffnungen kleiner als die Dicke des Substrats ist, und/oder
(viii) zusätzliche Kohlenstoffnanoröhren auf der oberen Oberfläche und der unteren Oberfläche gebildet sind, und/oder
(ix) Kohlenstoffnanoröhren der Vielzahl von Kohlenstoffnanoröhren wenigstens zum Teil mit einem metallischen Material beschichtet sind, wobei gegebenenfalls das metallische Material Kupfer umfasst, und/oder
(x) das metallische Substrat Kupfer umfasst.

7. Vorläufer eines leitfähigen Elements nach einem der vorstehenden Ansprüche, wobei das metallische Substrat so gestaltet ist, dass der Vorläufer eines leitfähigen Elements aufgerollt werden kann.

8. Einsatz umfassend den Vorläufer eines leitfähigen Elements nach Anspruch 7, wobei sich der Vorläufer eines leitfähigen Elements in einer aufgerollten Konfiguration befindet, wobei gegebenenfalls der Vorläufer eines leitfähigen Elements um eine Drehachse gerollt ist, so dass die Drehachse senkrecht zu der Längsachse einer länglichen Form ist.

9. Verfahren zur Herstellung eines Vorläufers eines leitfähigen Elements, wobei das Verfahren die folgenden Schritte umfasst:
Erhalten eines metallischen Substrats, wobei das metallische Substrat eine obere Oberfläche und eine untere Oberfläche und eine Vielzahl von Öffnungen aufweist, wobei jede der Vielzahl von Öffnungen durch eine Wand definiert ist, die sich durch das Substrat zwischen der oberen Oberfläche und der unteren Oberfläche erstreckt, wobei jede der Vielzahl von Öffnungen eine Form auf der oberen Oberfläche des Substrats bildet, und wobei die Formen der Vielzahl von Öffnungen eine längliche Form umfassen, wobei die längliche Form eine Längsachse aufweist und wobei die Formen der Vielzahl von Öffnungen eine Form umfassen, die einen kreisförmigen Abschnitt umfasst; und
Aufwachsen einer Vielzahl von Kohlenstoffnanoröhren auf den Wänden jeder der Vielzahl von Öffnungen,
wobei gegebenenfalls der Schritt des Aufwachsens der Vielzahl von Kohlenstoffnanoröhren chemische Gasphasenabscheidung einsetzt.

10. Verfahren nach Anspruch 9, ferner umfassend den Schritt des Beschichtens von Kohlenstoffnanoröhren der Vielzahl von Kohlenstoffnanoröhren mit einem metallischen Material, wobei gegebenenfalls der Schritt des Beschichtens der Kohlenstoffnanoröhren Elektroplattieren umfasst, wobei gegebenenfalls ferner der Schritt des Beschichtens der Kohlenstoffnanoröhren Dekorieren der Kohlenstoffnanoröhren mit dem metallischen Material durch chemische Gasphasenabscheidung und anschließendes Elektroplattieren der Kohlenstoffnanoröhren mit dem metallischen Material umfasst.

11. Verfahren nach Anspruch 9 oder Anspruch 10, wobei der Schritt des Erhaltens eines metallischen Substrats die Schritte umfasst
Bereitstellen eines metallischen Substrats; und
Entfernen von Material von dem metallischen Substrat, um die Vielzahl von Öffnungen zu bilden, wobei gegebenenfalls der Schritt des Entfernens von Material Laserschneiden einsetzt.

12. Verfahren nach einem der Ansprüche 9 bis 11, wobei das Verfahren den Vorläufer eines leitfähigen Elements nach einem der Ansprüche 1 bis 7 bildet.

13. Verfahren zur Herstellung eines Einsatzes, wobei das Verfahren Herstellen des Vorläufers für leitfähiges Element nach einem der Ansprüche 9 bis 12 umfasst; und ferner den Schritt des Aufrollens des Substrats umfasst, um den Einsatz zu bilden,
wobei gegebenenfalls der Aufrollschritt Aufrollen des Substrats um eine metallische Spule umfasst, ferner gegebenenfalls
(i) wobei das Substrat vor dem Aufrollschritt an der metallischen Spule befestigt wird und/oder
(ii) wobei die metallische Spule mit dem darauf aufgerollten Substrat in einer metallischen Hülse platziert wird, um den Einsatz zu bilden, wobei gegebenenfalls die metallische Spule und die metallische Hülse Kupfer umfassen.

14. Verfahren zur Herstellung eines leitfähigen Elements, wobei das Verfahren Herstellen des Einsatzes nach Anspruch 13; und Ziehen des Einsatzes, um seine Länge zu vergrößern und das leitfähige Element zu bilden, umfasst,
gegebenenfalls (A) wobei
(i) die Längsachse der länglichen Form senkrecht zu einer Ziehrichtung des Ziehschritts ist, und/oder
(ii) das Verfahren ferner einen Glühschritt umfasst, der dem Ziehschritt folgt, wobei das Verfahren gegebenenfalls ferner zusätzliche Ziehschritte und zusätzliche Glühschritte umfasst, um das leitfähige Element zu bilden;
und/oder (B) wobei das leitfähige Element die Form eines Drahtes aufweist.

15. Verfahren zur Herstellung eines leitfähigen Elements, wobei das Verfahren Herstellen des Vorläufers eines leitfähigen Elements nach einem der Ansprüche 9 bis 12 umfasst; und ferner Komprimieren des metallischen Substrats, wie z.B. zum Bilden des leitfähigen Elements, umfasst.

16. Leitfähiges Element, erhältlich durch das Verfahren nach Anspruch 14 oder Anspruch 15.

17. Vorläufer eines leitfähigen Elements nach einem der Ansprüche 1 bis 7, Einsatz nach Anspruch 8 oder leitfähiges Element nach Anspruch 16, wobei die Vielzahl von Kohlenstoffnanoröhren mehrwandige Kohlenstoffnanoröhren umfasst.

## Revendications

1. Précurseur d'élément conducteur comprenant
un substrat métallique, dans lequel le substrat métallique a une surface supérieure et une surface inférieure, et une pluralité d'ouvertures, dans lequel chacune de la pluralité d'ouvertures est définie par une paroi s'étendant à travers le substrat entre la surface supérieure et la surface inférieure ; et
une pluralité de nanotubes de carbone, dans lequel on fait croître la pluralité de nanotubes de carbone sur la paroi de chacune de la pluralité d'ouvertures, chacune de la pluralité d'ouvertures formant une forme sur la surface supérieure du substrat, les formes de la pluralité d'ouvertures comprenant une forme comprenant une section circulaire, et les formes de la pluralité d'ouvertures comprenant une forme allongée, la forme allongée ayant un axe longitudinal,
éventuellement, chaque ouverture de la pluralité d'ouvertures formant une forme sur la surface inférieure du substrat correspondant à la forme sur la surface supérieure du substrat, et éventuellement chacune de la pluralité d'ouvertures présentant une section transversale sensiblement constante depuis la surface supérieure à la surface inférieure.

2. Précurseur d'élément conducteur selon la revendication 1, dans lequel la forme allongée comprend deux côtés parallèles, facultativement dans lequel les deux côtés parallèles de la forme allongée sont parallèles à 5° près à l'axe longitudinal de cette forme allongée.

3. Précurseur d'élément conducteur selon la revendication 2, dans lequel
(i) la forme allongée ayant deux côtés parallèles comprend en outre une première section circulaire, la première section circulaire reliant une première extrémité d'un des côtés parallèles à une première extrémité de l'autre côté parallèle,
facultativement, la forme allongée ayant deux côtés parallèles comprend en outre une seconde section circulaire, la seconde section circulaire reliant une seconde extrémité de l'un des côtés parallèles à une seconde extrémité de l'autre côté parallèle, facultativement en outre la forme allongée ayant un plan de symétrie situé entre les côtés parallèles et s'étendant parallèlement aux côtés parallèles, encore facultativement en outre les côtés parallèles ayant chacun une longueur supérieure à 0,5 mm
ou
(ii) la forme allongée est sous la forme d'un rectangle, chaque coin étant un coin arrondi, éventuellement la forme allongée ayant un plan de symétrie situé entre les côtés parallèles et s'étendant parallèlement aux côtés parallèles, en outre éventuellement les côtés parallèles ayant chacun une longueur supérieure à 0,5 mm.

4. Précurseur d'élément conducteur selon la revendication 2 ou la revendication 3, dans lequel la distance entre les côtés parallèles de la forme allongée est comprise entre 50 µm et 500 µm.

5. Précurseur d'élément conducteur selon l'une quelconque des revendications précédentes, dans lequel
(i) les formes de la pluralité d'ouvertures comprennent une pluralité de formes allongées, l'axe longitudinal de chacune des formes allongées étant dans les 5° de la parallèle l'un par rapport à l'autre, éventuellement, l'axe longitudinal de chacune des formes allongées étant parallèles à 5° près à un bord de la surface supérieure, ou
(ii) les formes de la pluralité d'ouvertures comprennent une première pluralité de formes allongées et une seconde pluralité de formes allongées, les axes longitudinaux de chacune de la première pluralité de formes allongées sont parallèles entre eux à 5° près et les axes longitudinaux de chacune de la seconde pluralité de formes allongées sont parallèles entre eux à 5° près, dans lequel les axes longitudinaux de la première pluralité de formes allongées ne sont pas parallèles entre eux à 5° près aux axes longitudinaux de la seconde pluralité de formes allongées.

6. Précurseur d'élément conducteur selon l'une quelconque des revendications précédentes, dans lequel
(i) les formes de la pluralité d'ouvertures comprennent deux formes différentes ou plus, et/ou
(ii) la pluralité d'ouvertures forment un motif répétitif sur la surface supérieure du substrat, et/ou
(iii) la distance la plus courte entre les ouvertures adjacentes est de 100 µm ou moins, éventuellement la distance la plus courte entre les ouvertures adjacentes étant perpendiculaire à l'axe longitudinal d'une forme allongée, et/ou
(iv) la pluralité d'ouvertures représentent 70 % ou plus de l'aire de la région de la surface supérieure à l'intérieur de laquelle les ouvertures sont présentes, et/ou
(v) la surface supérieure et la surface inférieure sont séparées par une distance qui est l'épaisseur du substrat, et dans lequel l'épaisseur est de 0,5 mm ou moins, et/ou
(vi) le substrat a une longueur qui s'étend le long de la surface supérieure et une largeur qui s'étend le long de la surface supérieure, la longueur étant perpendiculaire à la largeur, et le rapport longueur sur largeur étant de 2:1 ou plus, et/ou
(vii) la surface supérieure et la surface inférieure sont séparées par une distance qui est l'épaisseur du substrat et la distance la plus courte entre les ouvertures adjacentes étant inférieure à l'épaisseur du substrat, et/ou
(viii) des nanotubes de carbone supplémentaires sont formés sur la surface supérieure et la surface inférieure, et/ou
(ix) des nanotubes de carbone de la pluralité de nanotubes de carbone sont au moins partiellement revêtus d'un matériau métallique, éventuellement dans lequel le matériau métallique comprend du cuivre, et/ou
(x) le substrat métallique comprend du cuivre.

7. Précurseur d'élément conducteur selon l'une quelconque des revendications précédentes, dans lequel le substrat métallique est configuré de telle sorte que le précurseur d'élément conducteur puisse être enroulé.

8. Insert comprenant le précurseur d'élément conducteur selon la revendication 7, dans lequel le précurseur d'élément conducteur est dans une configuration enroulée, facultativement dans lequel le précurseur d'élément conducteur est enroulé autour d'un axe de rotation de telle sorte que l'axe de rotation soit perpendiculaire à l'axe longitudinal d'une forme allongée.

9. Procédé de production d'un précurseur d'élément conducteur, le procédé comprenant les étapes suivantes :
obtention d'un substrat métallique, le substrat métallique ayant une surface supérieure et une surface inférieure, et une pluralité d'ouvertures, chacune de la pluralité d'ouvertures étant définie par une paroi s'étendant à travers le substrat entre la surface supérieure et la surface inférieure, chacune de la pluralité d'ouvertures formant une forme sur la surface supérieure du substrat, et dans lequel les formes de la pluralité d'ouvertures comprennent une forme allongée, la forme allongée ayant un axe longitudinal et dans lequel les formes de la pluralité d'ouvertures comprennent une forme comprenant une section circulaire ; et
le fait de faire croître une pluralité de nanotubes de carbone sur les parois de chacune de la pluralité d'ouvertures,
éventuellement, l'étape de croissance de la pluralité de nanotubes de carbone utilise un dépôt chimique en phase vapeur.

10. Procédé selon la revendication 9, comprenant en outre l'étape de revêtement de nanotubes de carbone de la pluralité de nanotubes de carbone par un matériau métallique, facultativement dans lequel l'étape de revêtement des nanotubes de carbone comprend une électrodéposition, facultativement en outre dans lequel l'étape de revêtement des nanotubes de carbone comprend une décoration des nanotubes de carbone avec le matériau métallique via un dépôt chimique en phase vapeur et ensuite une électrodéposition des nanotubes de carbone avec le matériau métallique.

11. Procédé selon la revendication 9 ou la revendication 10, dans lequel l'étape d'obtention d'un substrat métallique comprend les étapes de
fourniture d'un substrat métallique ; et
élimination de matériau du substrat métallique pour former la pluralité d'ouvertures, l'étape d'élimination de matériau utilisant éventuellement une découpe laser.

12. Procédé selon l'une quelconque des revendications 9 à 11, dans lequel le procédé forme le précurseur d'élément conducteur selon l'une quelconque des revendications 1 à 7.

13. Procédé de production d'un insert, le procédé comprenant la production du précurseur d'élément conducteur selon l'une quelconque des revendications 9 à 12 ; et comprenant en outre l'étape d'enroulement du substrat pour former l'insert,
facultativement, l'étape d'enroulement comprenant l'enroulement du substrat autour d'une bobine métallique, éventuellement en outre
(i) dans lequel le substrat est fixé à la bobine métallique avant l'étape d'enroulement, et/ou
(ii) dans lequel la bobine métallique ayant le substrat enroulé est placée dans un manchon métallique pour former l'insert, éventuellement la bobine métallique et le manchon métallique comprenant du cuivre.

14. Procédé de production d'un élément conducteur, le procédé comprenant la production de l'insert selon la revendication 13 ; et l'étirage de l'insert pour augmenter sa longueur et former l'élément conducteur, éventuellement (A) dans lequel
(i) l'axe longitudinal de la forme allongée est perpendiculaire à une direction d'étirage de l'étape d'étirage, et/ou
(ii) le procédé comprend en outre une étape de recuit postérieure à l'étape d'étirage, éventuellement le procédé comprenant en outre des étapes d'étirage supplémentaires et des étapes de recuit supplémentaires pour former l'élément conducteur ;
et/ou (B) dans lequel l'élément conducteur se présente sous la forme d'un fil.

15. Procédé de production d'un élément conducteur, le procédé comprenant la production du précurseur d'élément conducteur selon l'une quelconque des revendications 9 à 12 ; et comprenant en outre la compression du substrat métallique de manière à former l'élément conducteur.

16. Elément conducteur pouvant être obtenu par le procédé de la revendication 14 ou de la revendication 15.

17. Précurseur d'élément conducteur selon l'une quelconque des revendications 1 à 7, insert selon la revendication 8, ou élément conducteur selon la revendication 16, dans lequel la pluralité de nanotubes de carbone comprend des nanotubes de carbone multi-parois.
